# EUROPEAN PATENT APPLICATION

(11) **EP 1 542 097 A1**
(43) Date of publication of application: **15.06.2005**
(21) Application number: 03766662.5
(22) Date of filing: 30.07.2003
(51) Int. Cl.: G03H 1/04, G03H 1/22, G03H 1/18, G11B 7/0065

(54) **HOLOGRAM RECORDING/REPRODUCING METHOD AND HOLOGRAM RECORDING/REPRODUCING DEVICE**

(30) Priority: 01.08.2002 JP 2002225052; 01.08.2002 JP 2002225053
(71) Applicant: Pioneer Corporation, Tokyo 153-8654 (JP)
(72) Inventor: KUBOTA, Yoshihisa, Pioneer Corporation, Tsurugashima-shi, Saitama 350-2288 (JP); TANAKA, Satoru, Pioneer Corporation, Tsurugashima-shi, Saitama 350-2288 (JP); ITO, Yoshihisa, Pioneer Corporation, Tsurugashima-shi, Saitama 350-2288 (JP); TACHIBANA, Akihiro, Pioneer Corporation, Tsurugashima-shi, Saitama 350-2288 (JP); KURODA, Kazuo, Pioneer Corporation, Tsurugashima-shi, Saitama 350-2288 (JP); SUGIURA, Satoshi, Pioneer Corporation, Tsurugashima-shi, Saitama 350-2288 (JP)
(74) Representative: Neugebauer, Jürgen, Dipl.Phys.
(86) International application number: PCT/JP2003/009649
(87) International publication number: WO 2004/013706

(57) **Abstract**

A method for holographic recording and reproducing includes a recording process and a reproducing process. In the recording process, a coherent reference beam is spatially modulated in accordance with information to be recorded to generate a signal beam, and the signal beam is converged. The converged signal beam enters and passes through a recording medium made of a photosensitive material. A diffraction grating area according to a light interference pattern is created in a portion where a 0th-order beam and a diffraction beam of the signal beam interfere with each other inside the recording medium. In the reproducing process, a reproduced wave corresponding to the signal beam is generated by illuminating the diffraction grating area with the reference beam.

## Description

### TECHNICAL FIELD

The present invention relates to a recording medium made of a photosensitive material, so-called a holographic memory, and especially the present invention relates to a method for holographic recording and reproducing and an optical information recording and reproducing apparatus using the holographic memory.

### BACKGROUND ART

A volume holographic recording system is known as a digital data recording system using a principle of holography. This system is characterized in that information is recorded on a recording medium made of a photosensitive material such as a photorefractive material as a variation of a refractive index of the medium.

One of conventional methods for holographic recording and reproducing uses the Fourier transform for recording and reproducing.

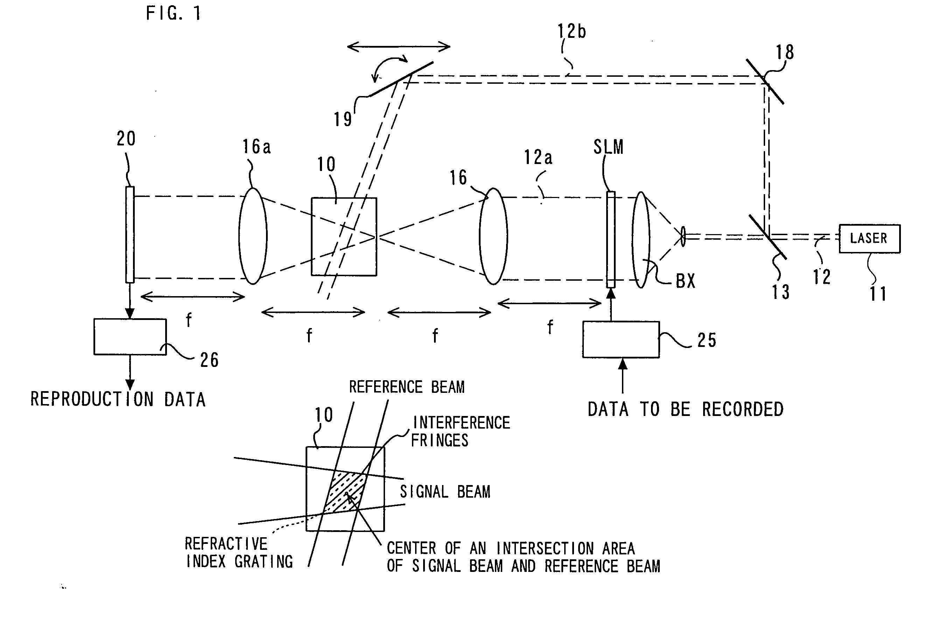

Referring to Fig. 1, in the conventional 4f series of holographic recording and reproducing apparatus, a beam splitter 13 splits a laser beam 12 generated from a laser light source 11 into light beams 12a and 12b. A beam expander BX expands the diameter of the light beam 12a. Then, the light beam 12a being a parallel pencil is applied to a spatial light modulator SLM such as the panel of a transmissive TFT liquid crystal display (LCD) and the like. The spatial light modulator SLM receives information to be recorded as electronic signals encoded by an encoder, to form two-dimensional data, that is, a light and dark dot pattern and the like corresponding to the information formed on a plane. When the light beam 12a passes through the spatial light modulator SLM, the spatial light modulator SLM optically modulates the light beam 12a to a signal beam including a data signal component. Since the signal beam 12a including a dot pattern signal component passes through a Fourier transform lens 16 disposed at a distance of a focal length f from the spatial light modulator SLM, the dot pattern signal component is transformed to a Fourier component and converged into a recording medium 10. A light beam 12b split by the beam splitter 13 is led into the recording medium 10 with mirrors 18 and 19. The light beam 12b as a reference beam intersects the light path of the signal beam 12a inside the recording medium 10. The interference of the light beam 12b and the signal beam 12a creates a light interference pattern. The whole light interference pattern is recorded as a diffraction grating such as the variation of a refractive index (a refractive index grating) and the like.

As described above, the coherent parallel pencil is diffracted by the dot pattern data, and forms an optical image with the Fourier transform lens. The distribution of the image on the focal plane of the Fourier transform lens, namely on a Fourier plane, interferes with the coherent reference beam. Then, interference fringes are recorded on the recording medium in the vicinity of a focal point. After finishing the record of a first page, the turnable mirror is turned by predetermined degrees and moved in parallel, in order to vary the incident angle of the reference beam 12b into the recording medium 10. Then, a second page is recorded following the same procedure as above. Multiple angle recording is carried out in this way.

On the other hand, the inverse Fourier transform is used in reproducing a dot pattern image. In reproducing the recorded information, as shown in Fig. 1, the spatial light modulator SLM, for example, intercepts the light path of the signal beam 12a, so that only the reference beam 12b is incident on the recording medium 10. The position and the angle of the mirror are so controlled by varying the combination of rotation and movement thereof, that the incident angle of the reference beam 12b becomes same as that in recording of the page to be reproduced. A reproduced beam which reproduces the recorded signal beam appears on the opposite side of the recording medium 10, on which the recorded signal beam 12a is incident. Leading the reproduced beam to an inverse Fourier transform lens 16a and performing the inverse Fourier transform reproduces the dot pattern signals. The dot pattern signals are received by a photo detector 20 such as a charge-coupled device CCD and the like disposed in the position of a focal length of the lens 16a, and re-converted into the electrical digital data signals. Then, the digital data signals are sent to a decoder to decode original data.

Referring to Fig. 1, the multiple images are conventionally recorded in a few millimeters volume of the recording medium with the use of multiple angles and multiple wavelengths, in order to record the information in some volume thereof in high density. Accordingly, a wide field and long range coherent for the signal beam and the reference beam is necessary to secure the selectivity of an angle and a wavelength. Therefore, the intensity of the light beam per the amount of light used for recording is decreased. Multiple recording is necessary for high density recording, so that the recording medium which has a large erasure time constant and is easy to perform the multiple recording is required.

The conventional holographic recording and reproducing apparatus requires high spec two lenses, which are the Fourier transform lens and the inverse Fourier transform lens. The apparatus also needs to be provided with a high accuracy paging control mechanism for controlling the reference beam in recording and reproducing the information. Therefore, there is a disadvantage that the apparatus becomes large in size.

### DISCLOSURE OF INVENTION

An object of the present invention is to provide a method for holographic recording and reproducing and an apparatus therefor which can decrease in size and record a hologram on a holographic recording medium.

According to the present invention, there is provided a method for holographic recording and reproducing comprising a recording process and a reproducing process,
the recording process including the steps of:
   generating a signal beam by spatially modulating a coherent reference beam in accordance with information to be recorded;
   illuminating with the signal beam a recording medium made of a photosensitive material to allow the signal beam to pass through said recording medium; and
   creating a diffraction grating area recorded by a light interference pattern in a portion where a 0th-order beam and a diffraction beam of the signal beam interfere with each other inside said recording medium; and
the reproducing process including the step of:
   illuminating said diffraction grating area with said reference beam to generate a reproduced wave corresponding to the signal beam.

The signal beam is a light beam resulted from such operation that a coherent reference beam spatially modulated in accordance with information to be recorded, which comprises a 0th-order beam having a wavefront having the same shape wherever regardless spatial modulation; and a diffraction beam subjected to the spatial modulation. Thus, the present invention uses the 0th-order beam of the signal beam as reference light for a holographic recording.

In recording, the recording medium is illuminated with the signal beam to generate optical interference fringe patterns caused by the 0th-order beam and the diffraction beam at the path of the signal beam to record the refractive index grating in the recording medium correspondingly to the interference fringe patterns.

In reproducing, the recording medium particularly the refractive index grating therein is illuminated with a signal beam which is not spatially modulated i.e., non-modulated reference beam with the same positional and angular condition of the signal beam used in the recording. Since the non-modulated reference beam includes the 0th-order beam as a major components, the illumination of the non-modulated reference beam to the refractive index grating of the recording medium generates a reproduced wave having a wavefront as the same as that of the signal beam used in the recording.

In a detection of the reproduced wave, the reproduced waves emitted from the refractive index grating in the recording medium overlap with the non-modulated reference beam used for the reproducing. Removing or reducing the non-modulated reference beam used for the reproducing facilitates to detect the reproduced wave easily and reproduce the recorded information electrically.

According to the present invention, there is also provided a recording medium made of a photosensitive material capable of being recorded by illumination with a coherent light beam, the recording medium comprising an incident-light-processing area provided in said recording medium on an opposite side of an entrance surface of the recording medium on which the light beam is incident, the incident-light-processing area separating a 0th-order beam and a diffraction beam of the light beam from each other to return a part of the incident beam to the inside of said recording medium.

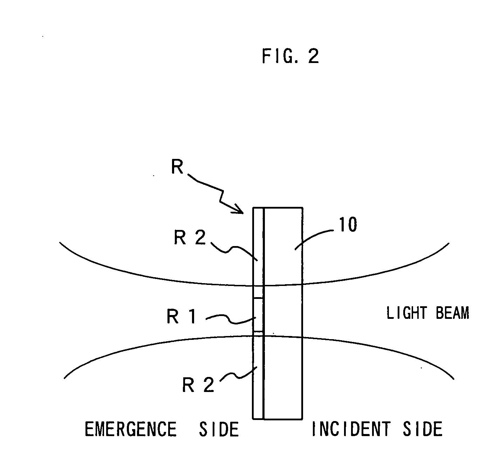

To removing or reduce the non-modulated reference beam used for the reproducing, as shown in Fig. 2, the recording medium 10 is provided with an incident-light-processing area R which comprises a 0th-order-beam-processing area R1 processing the 0th-order beam of the signal beam and the non-modulated reference beam and a diffraction-beam-processing area R2 processing the diffraction beam of the signal beam in such a manner that the incident-light-processing area is disposed at a beam waist of the non-modulated reference beam which is converged by a condenser lens to focus on the opposite side of an entrance surface of the recording medium on which the beam is incident.

There are considered the use of a phase conjugate wave as one of methods for a holographic recording and reproducing system in the recording and reproducing method. The reproducing method with the phase conjugate beam generally requires the identical reference beam in both the recording and reproducing similarly to the other methods. For example, there is a method for recording and reproducing information in which the refractive index grating is generated and recorded by interference in the recording medium in such a manner that the signal beam is irradiate to the recording medium and reflected by a mirror to generate a phase conjugate wave back to the recording medium so that the phase conjugate wave and the signal beam interfere each other. In such recording and reproducing method, there are drawbacks such as a necessity to insert and detach the reflecting mirror, a degradation of light source with a return of the signal beam particularly the 0th-order beam, and a large-sized device including an optical systems to prevent the return light. In contrast, according to the present invention, the incident-light-processing area dissolves the problems because the 0th-order beam and the diffraction beam in the incident light are processed individually with different processed such as a separation to return a part of the incident beam to the inside of the recording medium.

In addition, there is no necessity to provide respective two optical systems for the reference beam and signal beam differently than the conventional holographic recording and reproducing method in the present invention. Furthermore, the method of the present invention does not require a condenser lens with a high performance which is used as an objective lens and the like. Adopting this recording and reproducing method is highly effective to simplify and miniaturize a recording and reproducing apparatus, because of using the 0th-order beam and the diffraction beam (spatially modulated in accordance with information to be recorded) included in the signal beam.

According to the present invention, there is further provided a method for holographic recording comprising the steps of:
generating a signal beam by spatially modulating a coherent reference beam in accordance with information to be recorded;
illuminating with the signal beam a recording medium made of a photosensitive material to allow the signal beam to pass through said recording medium; and
creating a diffraction grating area recorded by a light interference pattern in a portion where a 0th-order beam and a diffraction beam of the signal beam interfere with each other inside said recording medium.

According to the present invention, there is still further provided a method for holographic reproducing comprising the steps of:
providing a recording medium made of a photosensitive material having a diffraction grating area formed through a recording process including the steps of: generating a signal beam by spatially modulating a coherent reference beam in accordance with information to be recorded; and illuminating with the signal beam the recording medium to allow the signal beam to pass through said recording medium so as to form the diffraction grating area recorded by a light interference pattern in a portion where a 0th-order beam and a diffraction beam of the signal beam interfere with each other inside said recording medium; and
illuminating a coherent reference beam to the diffraction grating area to generate a reproduced wave corresponding to the signal beam.

According to the present invention, moreover there is provided a holographic recording and reproducing apparatus for recording information as a diffraction grating area in a recording medium, and for reproducing said recorded information from said diffraction grating area, said holographic recording and reproducing apparatus comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam;
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium, and said illuminating optical system illuminating said diffraction grating area with said reference beam to generate a reproduced wave corresponding to the signal beam; and
a detecting unit for detecting said recorded information formed into an image by the reproduced wave.

According to the present invention, there is also provided a holographic recording apparatus for recording information as a diffraction grating area in a recording medium, comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam; and
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium.

According to the present invention, there is furthermore provided a holographic reproducing apparatus for reproducing information recorded as a diffraction grating area in a recording medium, the reproducing apparatus comprising:
a holding section for detachably holding a recording medium made of a photosensitive material;
a light source for generating a coherent reference beam;
an illuminating unit including an illuminating optical system for illuminating the recording medium with the reference beam to allow it to enter into and pass through the diffraction grating area in the recording medium to generate a reproduced wave corresponding to the signal beam; and
a detecting unit for detecting said recorded information formed into an image by the reproduced wave.

According to the present invention, there is furthermore provided another holographic recording and reproducing apparatus for recording information as a diffraction grating area in a recording medium, and for reproducing said recorded information from said diffraction grating area, said holographic recording and reproducing apparatus comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam;
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium, and said illuminating optical system illuminating said diffraction grating area with said reference beam to generate a reproduced wave corresponding to the signal beam;
an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium; and
a detecting unit for detecting said recorded information formed into an image by the reproduced wave.

According to the present invention, there is also provided another holographic recording apparatus for recording information as a diffraction grating area in a recording medium, comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam;
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium; and
an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium.

According to the present invention, there is further provided another holographic reproducing apparatus for reproducing information recorded as a diffraction grating area in a recording medium, the reproducing apparatus comprising:
a holding section for detachably holding a recording medium made of a photosensitive material;
a light source for generating a coherent reference beam;
an illuminating unit including an illuminating optical system for illuminating the recording medium with the reference beam to allow it to enter into and pass through the diffraction grating area in the recording medium to generate a reproduced wave corresponding to the signal beam;
an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium; and
a detecting unit for detecting said recorded information formed into an image by the reproduced wave.

### BRIEF DESCRIPTION OF THE DRAWINGS

Fig. 1 is a schematic view showing the configuration of a conventional holographic recording and reproducing system.
Fig. 2 is a schematic sectional view of a holographic recording medium according to an embodiment of the present invention.
Fig. 3 is a schematic view showing the configuration of a holographic recording and reproducing apparatus according to an embodiment of the present invention.
Fig. 4 is a schematic sectional view for explaining the recording process carried out by the holographic recording and reproducing apparatus according to the embodiment of the present invention.
Fig. 5 is a schematic sectional view of a holographic recording medium for use in the embodiment of the present invention.
Fig. 6 is a schematic plan view for explaining the relation between the holographic recording medium and a spatial light modulator according to the embodiment of the present invention.
Fig. 7 is a schematic perspective view for explaining the recording process carried out by the holographic recording and reproducing apparatus according to the present invention.
Fig. 8 is a schematic sectional view for explaining the reproducing process carried out by the holographic recording and reproducing apparatus according to the embodiment of the present invention.
Figs. 9 and 10 are schematic sectional views for explaining the recording process carried out by the holographic recording and reproducing apparatus according to modified examples of the embodiment of the present invention.
Fig. 11 is a schematic view showing the configuration of a holographic recording and reproducing apparatus according to another embodiment of the present invention.
Fig. 12 is a schematic sectional view for explaining the recording process carried out by the holographic recording and reproducing apparatus according to the embodiment of the present invention.
Fig. 13 is a schematic sectional view of a holographic recording medium for use in the embodiment of the present invention.
Fig. 14 is a schematic sectional view for explaining the reproducing process carried out by the holographic recording and reproducing apparatus according to the embodiment of the present invention.
Figs. 15 to 17 are schematic sectional views for explaining the recording process carried out by the holographic recording and reproducing apparatus according to modified examples of the embodiment of the present invention.
Fig. 18 is a schematic view showing the configuration of a holographic recording and reproducing apparatus according to another embodiment of the present invention.
Fig. 19 is a schematic plan view for explaining the relation between the holographic recording medium and a spatial light modulator according to the embodiment of the present invention.
Fig. 20 is a schematic perspective view for explaining the recording process carried out by the holographic recording and reproducing apparatus according to the present invention.
Figs. 21 and 22 are schematic sectional views for explaining the recording process carried out by the holographic recording and reproducing apparatus according to modified examples of the other embodiment of the present invention.
Fig. 23 is a schematic view showing the configuration of a holographic recording and reproducing apparatus according to another embodiment of the present invention.
Figs. 24 to 26 are schematic sectional views for explaining the recording process carried out by the holographic recording and reproducing apparatus according to modified examples of the other embodiments of the present invention.
Fig. 27 is a schematic perspective view showing a device for an incident-light-processing area of a holographic recording and reproducing apparatus according to another embodiment of the present invention.
Fig. 28 is a schematic perspective view showing a recording medium cartridge of a holographic recording and reproducing apparatus according to another embodiment of the present invention.

### DETAILED DESCRIPTION OF THE INVENTION

Embodiments of the present invention will be hereinafter described with reference to the accompanying drawings.

The present embodiment does not use the reference beam provided by another optical path in recording. Instead, only the signal beam is incident on the recording medium, and a refractive index grating generated by interference between the 0th-order beam and the diffraction beam of the signal beam is recorded. After that, the reproduced wave is reproduced from the refractive index grating by illuminating the refractive index grating only with the reference beam. An incident-light-processing area is integrally provided in the recording medium on an opposite side of an entrance surface thereof on which the light beam is incident. The incident-light-processing area separates a 0th-order beam and a diffraction beam of the light beam from each other to return a part of the incident beam to the inside of the recording medium.

### <First embodiment>

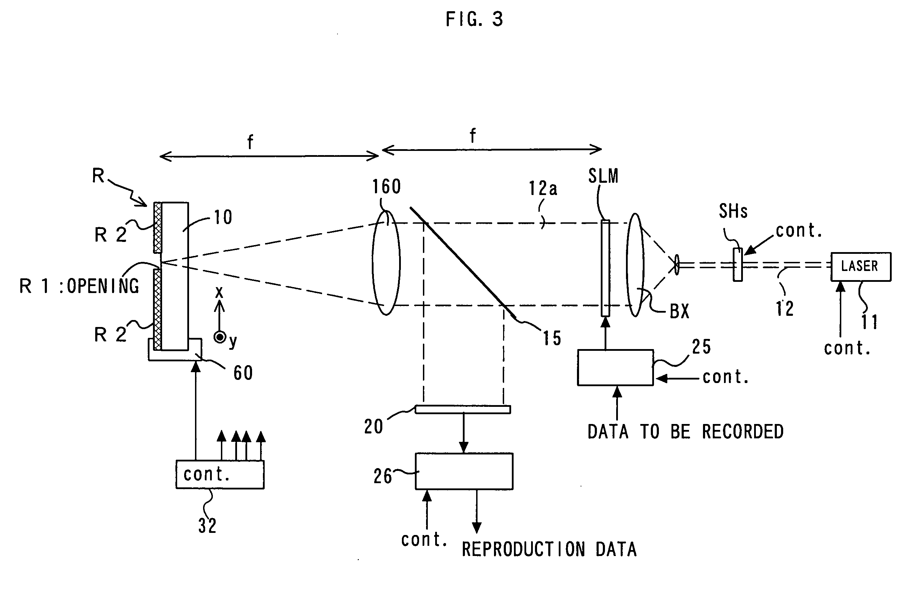

Fig. 3 shows a holographic recording and reproducing apparatus according to an embodiment. In the apparatus, a near-infrared laser like a DBR (Distributed Bragg Reflector) laser with a wavelength of 850nm, for example, is used as a light source 11. A shutter SHs, a beam expander BX, a spatial light modulator SLM, a beam splitter 15, and a condenser lens 160 are disposed in the optical path of a reference beam 12. The shutter SHs, controlled by a controller 32, controls an illumination time of the recording medium with light beam.

The beam expander BX expands the diameter of the light beam 12 passing through the shutter SHs. The light beam 12 becoming a parallel pencil is incident on the spatial light modulator SLM. The spatial light modulator SLM displays light and dark dot matrix signals, in accordance with electronic data received from an encoder 25. The electronic data is represented as a series of a page unit corresponding to a two-dimensional page. Upon passing through the spatial light modulator SLM on which the data is displayed, the reference beam is optically modulated into a signal beam 12a including the data as a dot matrix component. The condenser lens 160 performs the Fourier transform on the dot matrix component of the signal beam 12a passing through the beam splitter 15, and converges it so that the signal beam 12a comes into a focus behind a mounted recording medium 10. When the shutter SHs is opened, the signal beam 12a or the reference beam 12 is incident on the principal surface of the recording medium 10 at a predetermined incident angle, a zero-degree for example, due to the condenser lens 160. The beam splitter 15 is a splitting unit to separate a reproduced wave (described later) from the optical path of the reference beam to supply it the photo detector 20 of a photoelectric transfer device like a CCD. The spatial light modulator SLM and the CCD 20 are disposed at the focal point of the condenser lens 160.

In addition, the beam splitter 15 is disposed in such a position as to be able to send the reproduced wave to the CCD 20. The CCD 20 is connected to a decoder 26. The decoder 26 is connected to the controller 32. Taking a case where information corresponding to the type of a photorefractive crystal is attached to the recording medium 10 in advance, when the recording medium 10 is mounted on a movable stage 60, which is a holding section to move the recording medium 10, the controller 32 automatically reads the information with a proper sensor to perform controllings of the movement of the recording medium 10 and the recording and reprocusing adapted to the recording medium 10.

Referring to Fig. 3, the recording medium 10 is integrally provided on the opposite side of an entrance surface with an incident-light-processing area R which includes a 0th-order-beam-processing area R1 for passing the 0th-order beam in the signal beam 12a and a diffraction-beam-processing area R2 for reflecting the diffraction beam in the signal beam 12a. The incident-light-processing area R is provided for processing the signal beam. For example, the incident-light-processing area R comprises an opening for passing the 0th-order beam, and the diffraction-beam-processing area R2 for defining the opening. The incident-light-processing area R is not limited to above, as long as the 0th-order-beam-processing area R1 has a different role than the diffraction-beam-processing area R2. Zeroth-order beam absorbing material may be provided for the 0th-order-beam-processing area R1 instead of the opening. In other words, the 0th-order-beam-processing area R1 in the incident-light-processing area R passes or absorbs the 0th-order beam.

The operation in a recording process will be hereinafter described.

The controller 32 shown in Fig. 3 controls the position of the movable stage 60 holding the recording medium 10 so that the objective recording medium 10 is moved to a predetermined recording position.

Then, the recording signals are sent from the encoder 25 to the spatial light modulator SLM, and the spatial light modulator SLM displays a specific pattern corresponding to data to be recorded.

Then, the shutter SHs is opened, and the spatial light modulator SLM is illuminated with a reference beam 12. A signal beam 12a is generated in the reference beam 12 spatially modulated by the spatial light modulator SLM on which the pattern is displayed in accordance with information to be recorded. The recording medium 10 is irradiated with the generated signal beam 12a to the to start the recording process.

The recording process of the refractive index grating using the signal beam 12a (i.e., 0th-order beam and diffraction beam therein) in the recording medium will be hereinafter described in detail.

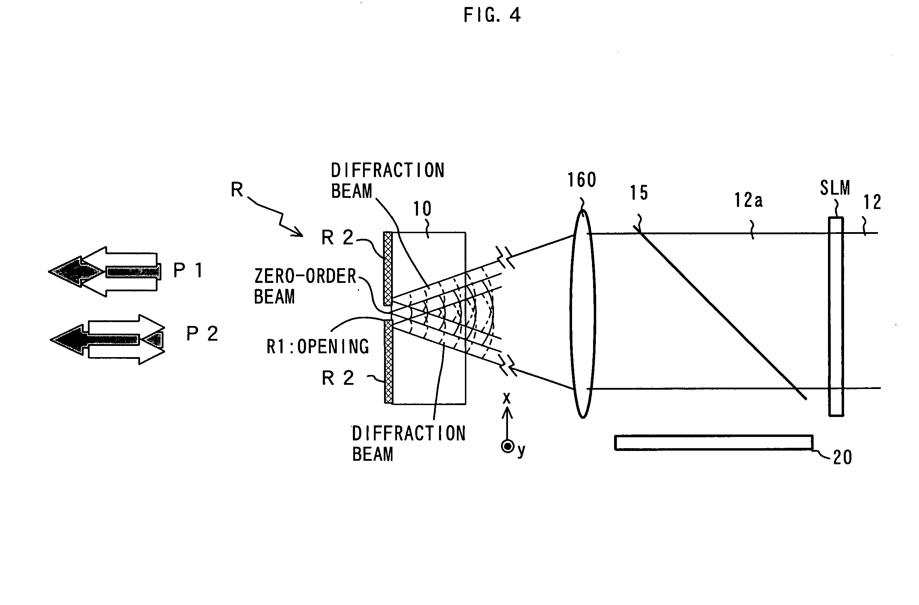

As shown in Fig. 4, the signal beam 12a includes a 0th-order beam and a diffraction beam subjected to the spatial modulation. The 0th-order beam of the signal beam 12a has a wavefront having a constant shape without any influence from the spatial modulation and therefore it is referred to as "hologram-reference beam". The diffraction beam of the signal beam 12a subjected to the spatial modulation is referred to as "hologram-signal beam". Accordingly, the signal beam 12a comprises the hologram-reference beam and the hologram-signal beam at least in recording.

Since the recording medium 10 is illuminated with the signal beam 12a, the hologram-reference beam and the hologram-signal beam are optically interfered with each other to create an optical interference fringe pattern P1, so that a refractive index grating P1 is recorded in the recording medium 10 due to the photorefractive effect.

The 0th-order beam (i.e. , hologram-reference beam) of the signal beam 12a passes through the 0th-order-beam-processing area R1 of the incident-light-processing area R and goes out from the opposite side of the recording medium 10, on which the signal beam 12a is incident. The diffraction beam (i.e., hologram-signal beam) of the signal beam 12a is reflected by the diffraction-beam-processing area R2 of the incident-light-processing area R back to the recording medium 10. Therefore such diffraction beam of the signal beam 12a reflected by the diffraction-beam-processing area R2 is referred to as "reflected-hologram-signal beam".

The reflected-hologram-signal beam and the hologram-reference beam are optically interfered with each other in the recording medium 10 to create an optical interference fringe pattern P2, so that a refractive index grating P2 is recorded corresponding to the optical interference fringe pattern P2 in the recording medium 10 due to the photorefractive effect.

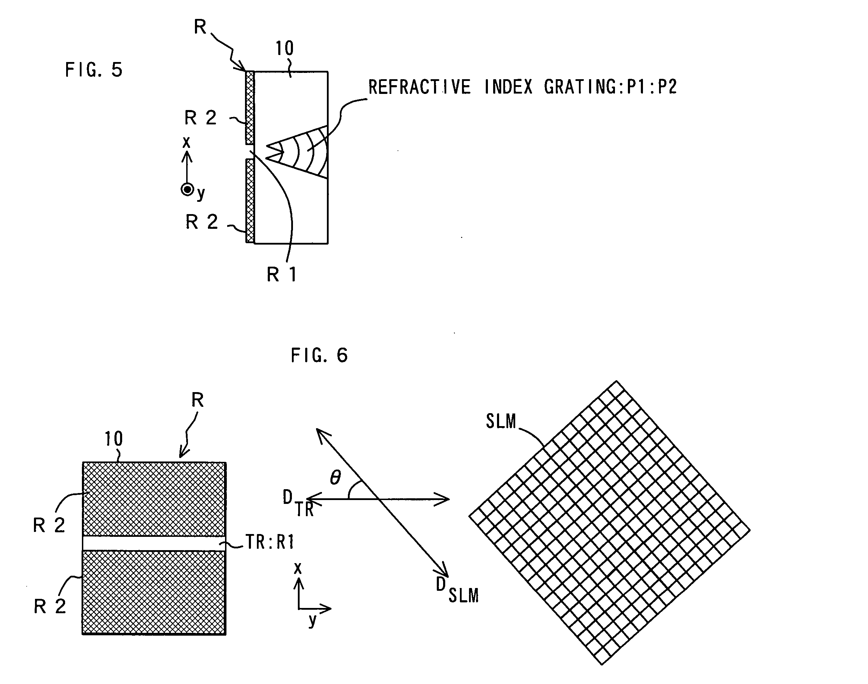

In this way, the 0th-order beam and the diffraction beam (i.e. , the signal beam 12a) from the spatial light modulator SLM together with the reflected diffraction beam from the diffraction-beam-processing area R2 create the set of the three-dimensional interference patterns inside the recording medium 10 in the recording. As shown in Fig. 5, the refractive index gratings P1, P2 corresponding to optical interference fringe patterns P1, P2 are hologram-recorded in the recording medium 10 due to a photorefractive effect.

After recording of the recording medium 10, the shutter SHs is closed by control of the controller 32.

When the recording is finished at the predetermined recording position of the recording medium 10, the recording medium 10 is forced to move (in a "y" direction of Fig. 3) for the purpose of reaching another predetermined recording position of the signal beam 12a with respect to the recording medium 10. Then a next recording is carried out following the previous procedure. The recording is sequentially carried out like this.

Fig. 6 shows the recording medium 10 and the spatial light modulator SLM placed side by side, which are viewed on an optical axis of the signal beam 12a in the direction from the light source. The 0th-order-beam-processing area R1 of the incident-light-processing area R provided in the recording medium 10 on the opposite side of the entrance surface defines a track TR which functions as the opening through which the 0th-order beam of the signal beam 12a can mainly pass, as shown in Fig. 6. The track TR continuously extends to a "y" direction of Fig. 6. A plurality of tracks TR may be intermittently provided in a line-like form. In this case, the tracks TR can hold a positional information of the 0th-order-beam-processing area R1 in the recording medium 10.

The recording medium 10 and the spatial light modulator SLM are relatively disposed with respect to the optical axis in such a manner that the extending direction D_{TR} of the track TR makes a predetermined angle of θ (θ≠0) with the extending direction D_{SLM} of a row in the pixel matrix of the spatial light modulator SLM. Otherwise the extending direction of a column of the spatial light modulator SLM pixel matrix may be used for the angle setting between the recording medium 10 and the spatial light modulator SLM. The reason for this configuration of the angle setting between the recording medium 10 and the spatial light modulator SLM is as follows.

Generally, the spatial light modulator SLM displays a two-dimensional dot pattern whether or not to allow light to pass through each pixel based on information to be recorded during recording. The spatial light modulator SLM spatially modulates the reference beam 12 passing therethrough to generate the signal beam 12a. Then, the Fourier transform lens or condenser lens 160 performs the Fourier transform on the signal beam 12a to illuminate the recording medium 10 and to form on a Fourier plane FF a dot image caused by the 0th order beam and diffraction beam.

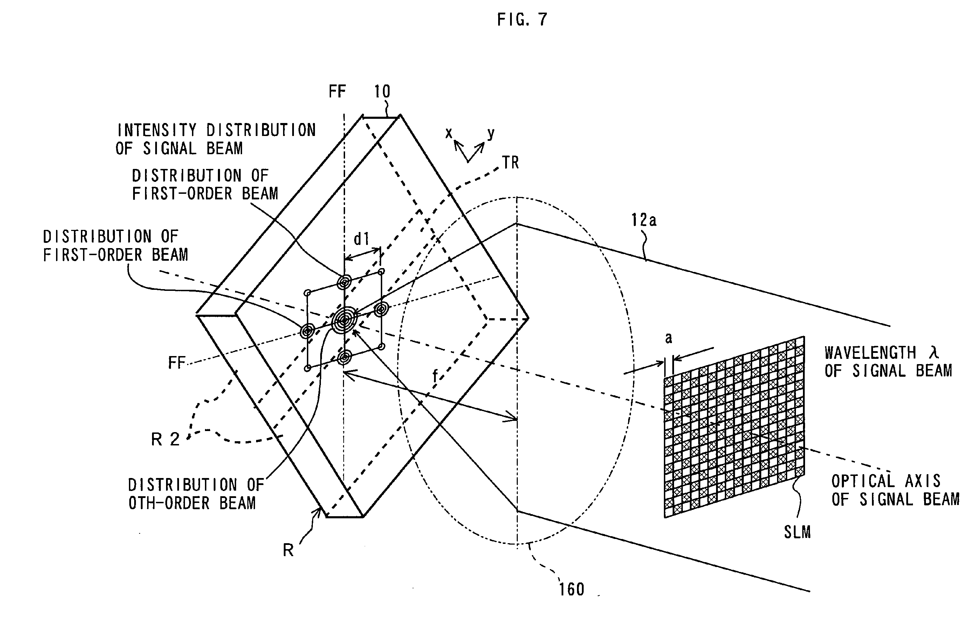

As shown in Fig. 7, the highest frequency component in the signal beam 12a modulated by the spatial light modulator SLM is that corresponds to the diffraction on the basis of pixel matrix (pitch is "a") thereof. The signal beam 12a is Fourier-transformed through the condenser lens 160 and then the spectrum distribution of light intensity with respect to a spatial frequency appears on the Fourier plane FF, as shown in Fig. 7, according to the spatial modulation due to the spatial light modulator SLM.

When using the spatial frequency (1/a) based on the pixel pitch of the spatial light modulator SLM, the wavelength (λ) of the signal beam 12a and the focal length (f) of the Fourier transfer lens (condenser lens 160), then the distance (d1) between the 0th-order beam and the 1st-order diffraction beam on the Fourier plane FF can be expressed as follows: d1 = (1/a) · (λ) · (f). Taking a case where, for example, the spatial light modulator having the pixel dot pitch of 10 µm, the wavelength of the signal beam 12a is 530 nm and the focal length is 14 mm, the distance (d1) between the 0th-order beam and the 1st-order diffraction beam is approximately 750 µm, according to the above equation. Since the highest frequency component in the signal beam 12a modulated by the spatial light modulator SLM that corresponds to the pixel matrix pitch, dot images corresponding to such pixel matrix pitch appear at positions farthest from the dot image caused by the 0th order beam of the signal beam 12a on a Fourier plane FF. Therefore, on the Fourier plane FF, the most part of the spectrum distribution of spatial frequency caused by the spatial light modulator resides within the area which centers on the 0th-order beam of the signal beam 12a and is delineated by the 1st-order diffraction beams that correspond to the pixel pitches along the row and column directions in the the spatial light modulator SLM.

The dot image caused by the diffraction beam corresponding to the extending direction D_{SLM} of a row of the spatial light modulator SLM pixel matrix is included in the incident-light-processing area R in the Fourier plane FF. When the extending direction D_{TR} of the track TR makes an angle θ=0 with the extending direction D_{SLM} of a row in the pixel matrix of the spatial light modulator SLM with respect to the optical axis of the signal beam intersecting them, the dot image corresponding to a spatial frequency component in the row extending direction D_{SLM} of the spatial light modulator SLM falls on the track TR.

Therefore the diffraction beam corresponding to the row extending direction D_{SLM} of the spatial light modulator SLM is not reflected by the diffraction-beam-processing area R2. Accordingly, there is no reflected-hologram-signal beam (corresponding to the row extending direction D_{SLM} of the spatial light modulator SLM) originated from the signal beam 12a in the generation of the optical interference fringe pattern P2 above-mentioned, so that no optical interference occurs with the hologram-reference beam of the signal beam 12a. In other words, when the extending direction D_{TR} of the track TR makes an angle θ=0 with the extending direction D_{SLM} of a row in the pixel matrix of the spatial light modulator SLM with respect to the optical axis of the signal beam intersecting them, any information based on the diffraction beam corresponding to the row extending direction of the spatial light modulator SLM is not recorded in the refractive index grating P2 of the recording medium 10.

The low frequency component of information to be recorded concentrates in the vicinity of the 0th-order beam, but the 0th-order beam is passed through on purpose. This embodiment uses the remaining diffraction beam which appears at points around the 0th-order beam.

In order to effectively use the diffraction beam, namely to optically interfere the reflected-hologram-signal beam of the signal beam 12a (corresponding to the row extending direction of the spatial light modulator SLM) with the 0th-order beam of the signal beam 12a (i.e., hologram-reference beam), the recording medium 10 and the spatial light modulator SLM are relatively disposed with respect to the optical axis in such a manner that the extending direction D_{TR} of the track TR makes a predetermined angle θ (θ≠0) with the extending direction D_{SLM} of a row (or a column) of the spatial light modulator SLM pixel matrix .

The operation in a reproducing process will be hereinafter described.

The controller 32 controls the position of the movable stage 60 holding the recording medium 10, as shown in Fig. 3, so that the objective recording medium 10 is moved to the predetermined recording position.

Then, in order not to modulate a reference beam 12 spatially modulated by the spatial light modulator SLM, the information which changes all pixels into a transparent state is sent from the encoder 25 to the spatial light modulator SLM, and the spatial light modulator SLM displays a transparent pattern.

Then, the shutter SHs is opened, and the spatial light modulator SLM is illuminated with reference beam 12 to generate a signal beam 12a. Then the recording medium 10 is illuminated with the signal beam 12a. In this way, the reproducing is started. It is noted that the signal beam 12a is not spatially modulated during the reproducing process because the spatial light modulator SLM displays the transparent pattern. Therefore no diffraction beam due to the spatial modulation occurs and thus the signal beam 12a includes only the 0th-order beam (i.e., hologram-reference beam).

The reproducing process of the refractive index grating using the signal beam 12a (i.e., hologram-reference beam) in the recording medium 10 will be hereinafter described.

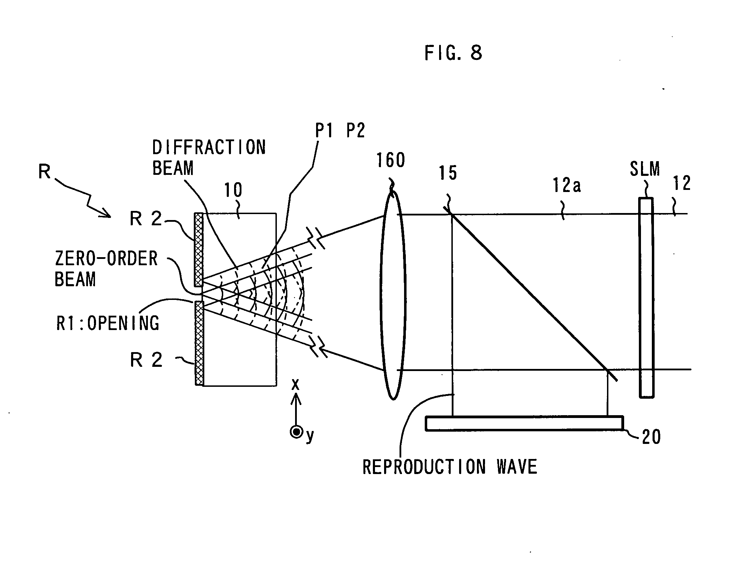

As shown in Fig. 8, the recording medium 10 is illuminated with a signal beam 12a (which is not spatially modulated i.e., hologram-reference beam) with the same positional and angular condition of the signal beam used in the recording. Just then, the refractive index gratings P1 and P2 are illuminated with the signal beam 12a in the recording medium 10, so that there emanate a first reproduced wave from the refractive index grating P1 corresponding to the recorded information and a second reproduced wave from the refractive index grating P2 respectively. The signal beam 12a passing through the 0th-order-beam-processing area R1 goes out from the opposite side of the entrance surface of the recording medium 10 on which the beam is incident. Therefore, the signal beam 12a does not return to the condenser lens 160 nor reach the photo detector 20. This phenomenon contributes to simplification of the reproducing of the recorded information.

The first reproduced wave is reflected back by the diffraction-beam-processing area R2 of the incident-light-processing area R to the recording medium 10 and goes out from the entrance surface of the recording medium 10 and passes through the condenser lens 160. The second reproduced wave, being originated from the diffraction grating recorded with the light reflected by the diffraction-beam-processing area R2 in the recording process, goes out from the entrance surface of the recording medium 10 and passes through the condenser lens 160. In this way, at least the first and second reproduced waves go out from the entrance surface of the recording medium 10 and pass through the condenser lens 160.

After passing through the condenser lens 160, the first and second reproduced waves are reflected by the beam splitter 15 and form an image dot pattern corresponding to the recorded information on the photo detector 20. Then the photoreceptor of the CCD 20 receives it to re-convert its dot pattern signals into the electrical digital data signals. Then, the digital data signals are sent to the decoder 26 to reproduce the original data.

Next the shutter SHs is closed by control of the controller 32, after reproducing of the recording information at the predetermined recording position.

Next the recording medium 10 is forced to move (in a "y" direction of Fig. 3) for the purpose of reaching another predetermined recording position of the signal beam 12a with respect to the recording medium 10. Then a next reproducing is carried out following the previous procedure. The reproducing is sequentially carried out like this.

### <Second embodiment>

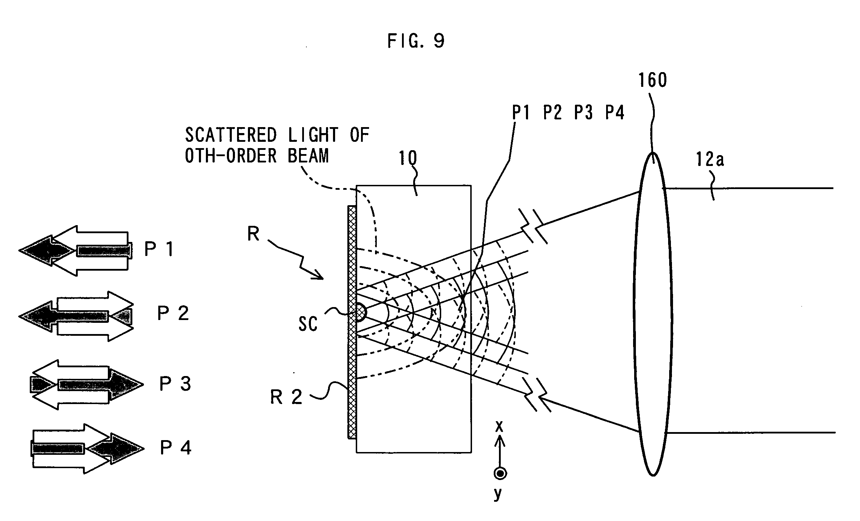

Fig. 9 shows another modified example of the embodiment. An incident-light-processing area R comprises the diffraction-beam-processing area R2 provided in the recording medium 10 on the opposite side of the entrance surface, and a 0th-order-beam-scattering area SC provided inside the recording medium 10 along a track. The 0th-order-beam-scattering area SC functions as another 0th-order-beam-processing area R1 which separates the 0th-order beam of the incident light from the diffraction beam thereof and returns a part of the beam to the inside of the recording medium 10. The 0th-order-beam-scattering area SC scatters the 0th-order beam of the signal beam 12a. The track-shaped 0th-order-beam-scattering area SC extending in the "y" direction sends the 0th-order beam of the signal beam 12a back into the recording medium 10. The holographic recording is carried out with the use of the interference fringes created from the scattered 0th-order beam, the incident 0th-order beam, the incident diffraction beam and the reflected diffraction beam.

In other words, the incident-light-processing area R of the recording medium 10 comprises a 0th-order-beam-scattering area SC scattering the 0th-order beam of the signal beam 12a (i.e., hologram-reference beam) and a diffraction-beam-processing area R2 reflecting the diffraction beam (i.e. , hologram-signal beam). The 0th-order-beam-scattering area SC continuously extends to a "y" direction of Fig. 9 like a track. A plurality of 0th-order-beam-scattering areas SC may be intermittently provided in a line-like form. In this case, the 0th-order-beam-scattering areas SC can hold a positional information of the 0th-order-beam-processing area R1 in the recording medium 10.

The recording process of the refractive index grating using the signal beam 12a (i.e., hologram-reference beam and hologram-signal beam) in the recording medium will be hereinafter described.

Since the recording medium 10 is illuminated with the signal beam 12a, the hologram-reference beam and the hologram-signal beam are optically interfered with each other to create an optical interference fringe pattern P1, so that a refractive index grating P1 is recorded in the recording medium 10 due to the photorefractive effect.

The 0th-order beam of the signal beam 12a (i.e., hologram-reference beam) is scattered by the 0th-order-beam-scattering area SC of the incident-light-processing area R back to the recording medium 10. Therefore such scattered 0th-order beam of the signal beam 12a is referred to as "scattered-hologram-reference beam". The diffraction beam (i.e., hologram-signal beam) of the signal beam 12a is reflected by the diffraction-beam-processing area R2 of the incident-light-processing area R back to enter the recording medium 10 as the reflected-hologram-signal beam.

The reflected-hologram-signal beam and the hologram-reference beam of the signal beam 12a are optically interfered with each other in the recording medium 10 to create an optical interference fringe pattern P2, so that a refractive index grating P2 is recorded corresponding to the optical interference fringe pattern P2 in the recording medium 10 due to the photorefractive effect.

The scattered-hologram-reference beam and hologram-signal beam of the signal beam 12a are optically interfered with each other in the recording medium 10 to create an optical interference fringe pattern P3, so that a refractive index grating P3 is recorded in the recording medium 10 due to the photorefractive effect.

The scattered-hologram-reference beam and reflected-hologram-signal beam of the signal beam 12a are optically interfered with each other in the recording medium 10 to create an optical interference fringe pattern P4, so that a refractive index grating P4 is recorded in the recording medium 10 due to the photorefractive effect.

Therefore, in the embodiment shown in Fig. 9, the refractive index gratings P1, P2, P3 and P4 corresponding to optical interference fringe patterns P1, P2, P3 and P4 are hologram-recorded in the recording medium 10 due to a photorefractive effect at least.

The reproducing process of the refractive index grating using the signal beam 12a (i.e. , hologram-reference beam) in the recording medium 10 will be hereinafter described.

The signal beam 12a is not spatially modulated during the reproducing process because the spatial light modulator SLM displays the transparent pattern. Therefore no diffraction beam due to the spatial modulation occurs and thus the signal beam 12a includes only the 0th-order beam.

The recording medium 10 is illuminated with a signal beam 12a (which is not spatially modulated i.e., hologram-reference beam) with the same positional and angular condition of the signal beam used in the recording. Just then, the refractive index gratings P1 and P2 are illuminated with the signal beam in the recording medium 10, so that there emanate a first reproduced wave from the refractive index grating P1 corresponding to the recorded information and a second reproduced wave from the refractive index grating P2 respectively. Next the signal beam 12a (i.e., hologram-reference beam) is scattered by the 0th-order-beam-scattering area SC of the incident-light-processing area R back to the recording medium 10 and becomes a scattered-hologram-reference beam. Since the refractive index grating P3 and the refractive index grating P4 in the recording medium 10 are illuminated with the scattered-hologram-reference beam, there emanate a third reproduced wave from the refractive index grating P3 corresponding to the recorded information and a fourth reproduced wave from the refractive index grating P4.

The scattered-hologram-reference beam goes out from the entrance surface of the recording medium 10, a part of which passes through the condenser lens 160. However, the scattered-hologram-reference beam is hardly received by the photo detector 20 because of being scattered. This phenomenon contributes to simplification of the reproducing of the recorded information.

The first and third reproduced waves originated from the diffraction beam component are reflected by the diffraction-beam-processing area R2 of the incident-light-processing area R back to the recording medium 10 and go out from the entrance surface of the recording medium 10 and passes through the condenser lens 160. The second and fourth reproduced waves originated from the diffraction beam component reflected by the diffraction-beam-processing area R2 in the recording process go out from the entrance surface of the recording medium 10 and passes through the condenser lens 160. In this way, at least the first, second third and fourth reproduced waves go out from the entrance surface of the recording medium 10 and pass through the condenser lens 160. The later processes are performed in the same manner of the embodiment shown in Fig. 3.

### <Third embodiment>

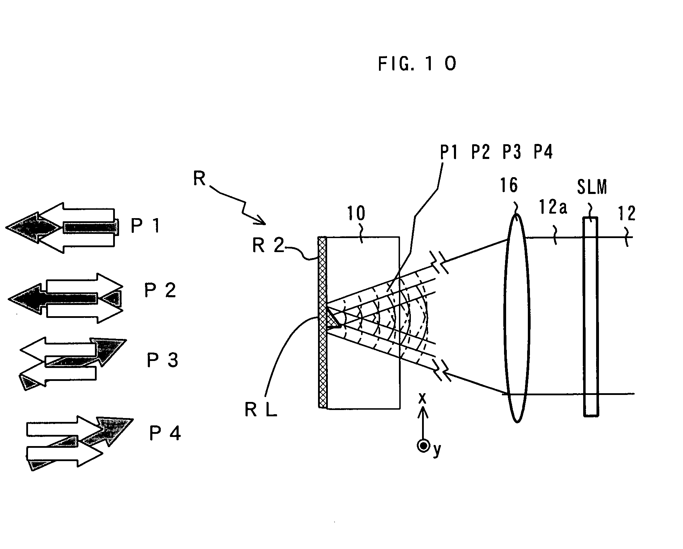

Fig. 10 shows a further modified example of the embodiment. An incident-light-processing area comprises the diffraction-beam-processing area R2 provided in the recording medium 10 on the opposite side of the entrance surface, and a 0th-order-beam-deflecting area RL provided inside the recording medium 10 along the track. The 0th-order-beam-deflecting area RL has an inclined reflective surface for deflecting the 0th-order beam of the signal beam 12a to the inside with respect to the axis of the signal beam 12a. The 0th-order-beam-deflecting area RL functions as another 0th-order-beam-processing area R1 which separates the 0th-order beam of the incident light from the diffraction beam and returns a part of the beam to the inside of the recording medium 10. The track-shaped 0th-order-beam-deflecting area RL extending in the "y" direction returns the 0th-order beam of the signal beam 12a to the recording medium 10, in the state of deflection toward one side of the track. The holographic recording is carried out with the use of the interference fringes created from the deflected 0th-order beam, the incident 0th-order beam and the incident diffraction beam and the reflected diffraction beam. According to the both modified examples described above, since all of the signal beam and the diffraction beam are returned to the inside of the recording medium 10, it is possible to efficiently use an amount of illuminated light.

In other words, the incident-light-processing area R of the recording medium 10 comprises a 0th-order-beam-deflecting area RL deflecting the 0th-order beam of the signal beam 12a (i.e. , hologram-reference beam) and a diffraction-beam-processing area R2 reflecting the diffraction beam (i.e. , hologram-signal beam). The 0th-order-beam-deflecting area RL continuously extends to a "y" direction of Fig. 10 like a track. A plurality of 0th-order-beam-deflecting areas RL may be intermittently provided in a line-like form. In this case, the 0th-order-beam-deflecting areas RL can hold a positional information of the 0th-order-beam-processing area R1 in the recording medium 10.

The recording process of the refractive index grating using the signal beam 12a (i.e., hologram-reference beam and hologram-signal beam) in the recording medium will be hereinafter described.

Since the recording medium 10 is illuminated with the signal beam 12a, the hologram-reference beam and the hologram-signal beam are optically interfered with each other to create an optical interference fringe pattern P1, so that a refractive index grating P1 is recorded in the recording medium 10 due to the photorefractive effect.

The 0th-order beam of the signal beam 12a (i.e., hologram-reference beam) is deflected and reflected by the 0th-order-beam-deflecting area RL of the incident-light-processing area R back to the recording medium 10. Therefore such deflected and reflected 0th-order beam of the signal beam 12a is referred to as "deflected-hologram-reference beam". The diffraction beam (i.e., hologram-signal beam) of the signal beam 12a is reflected by the diffraction-beam-processing area R2 of the incident-light-processing area R back to enter.

The reflected-hologram-signal beam and the hologram-reference beam of the signal beam 12a are optically interfered with each other in the recording medium 10 to create an optical interference fringe pattern P2, so that a refractive index grating P2 is recorded corresponding to the optical interference fringe pattern P2 in the recording medium 10 due to the photorefractive effect.

The deflected-hologram-reference beam and hologram-signal beam of the signal beam 12a are optically interfered with each other in the recording medium 10 to create an optical interference fringe pattern P3, so that a refractive index grating P3 is recorded in the recording medium 10 due to the photorefractive effect.

The deflected-hologram-reference beam and reflected-hologram-signal beam of the signal beam 12a are optically interfered with each other in the recording medium 10 to create an optical interference fringe pattern P4, so that a refractive index grating P4 is recorded in the recording medium 10 due to the photorefractive effect.

Therefore, in the embodiment shown in Fig. 10, the refractive index gratings P1, P2, P3 and P4 corresponding to optical interference fringe patterns P1, P2, P3 and P4 are hologram-recorded in the recording medium 10 due to a photorefractive effect at least.

The reproducing process of the refractive index grating using the signal beam 12a (i.e. , hologram-reference beam) in the recording medium 10 will be hereinafter described.

The signal beam 12a is not spatially modulated during the reproducing process because the spatial light modulator SLM displays the transparent pattern. Therefore no diffraction beam due to the spatial modulation occurs and thus the signal beam 12a includes only the 0th-order beam.

The recording medium 10 is illuminated with a signal beam 12a (which is not spatially modulated i.e., hologram-reference beam) with the same positional and angular condition of the signal beam used in the recording. Just then, the refractive index gratings P1 and P2 are illuminated with the signal beam in the recording medium 10, so that there emanate a first reproduced wave from the refractive index grating P1 and a second reproduced wave from the refractive index grating P2 respectively. Next the signal beam 12a (i.e., hologram-reference beam) is deflected and reflected by the 0th-order-beam-deflecting area RL of the incident-light-processing area R back to the recording medium 10 and becomes a deflected-hologram-reference beam. Since the refractive index grating P3 and the refractive index grating P4 in the recording medium 10 are illuminated with the deflected-hologram-reference beam, there emanate a third reproduced wave from the refractive index grating P3 corresponding to the recorded information and a fourth reproduced wave from the refractive index grating P4.

The deflected-hologram-reference beam goes out from the entrance surface of the recording medium 10, a part of which passes through the condenser lens 160. Alternatively, a configuration preventing the beam from returning to the condenser lens 160 may be provided by a modified slanting angular shape of 0th-order-beam-deflecting area RL. Even if a part of the beam returns to the condenser lens 160, it is hardly received by the photo detector 20 because of being deflected. This phenomenon contributes to simplification of the reproducing of the recorded information.

The first and third reproduced waves originated from the diffraction beam component are reflected by the diffraction-beam-processing area R2 of the incident-light-processing area R back to the recording medium 10 and go out from the entrance surface of the recording medium 10 and passes through the condenser lens 160. The second and fourth reproduced waves originated from the diffraction beam component reflected by the diffraction-beam-processing area R2 in the recording process go out from the entrance surface of the recording medium 10 and passes through the condenser lens 160. In this way, at least the first, second third and fourth reproduced waves go out from the entrance surface of the recording medium 10 and pass through the condenser lens 160. The later processes are performed in the same manner of the embodiment shown in Fig. 3.

According to both the adjacent modified examples described above, since the 0th-order beam of the signal beam 12a is returned to the inside of the recording medium 10 via the incident-light-processing area R, it is possible to efficiently use an amount of illuminated light and further these configurations contribute to simplification of the reproducing of the recorded information.

### <Fourth embodiment>

In the above embodiments, the holographic recording and producing in the reflective form in which the diffraction-beam-processing area R2 of the incident-light-processing area R reflects the light beam are described, but a transparent diffraction-beam-processing area R2 can also be used with the same effect in the present invention.

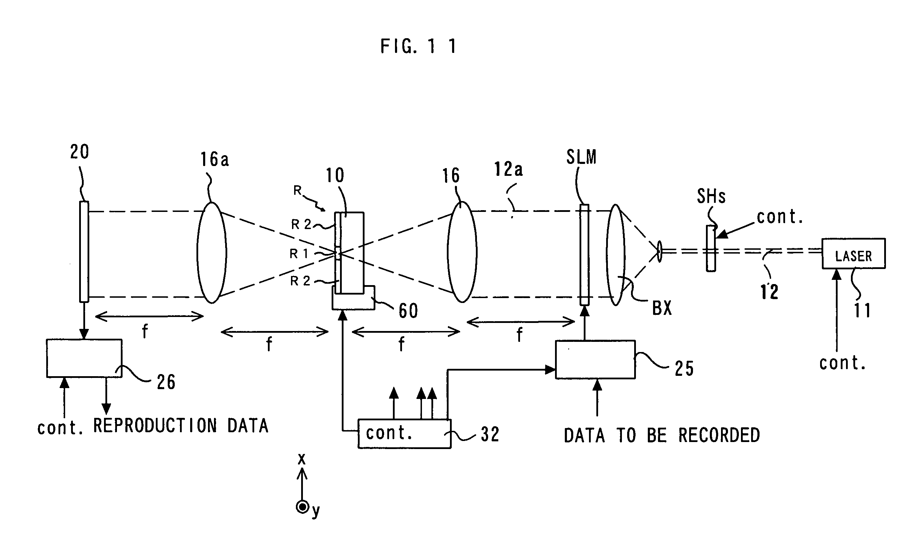

Fig. 11 shows a holographic recording and reproducing apparatus according to another embodiment that uses the recording medium having a 0th-order-beam-processing area R1 and a diffraction-beam-processing area R2 through which the light beam passes, i.e., the whole incident-light-processing area R is light-permeable. The holographic recording and reproducing apparatus of this embodiment is identical to the apparatus shown in Fig. 1, except that the optical system composed of the beam splitter 13, the mirrors 18 and 19 for generating the reference beam is removed. The 0th-order-beam-processing area R1 may be adapted to a track used for a tracking servo as continuously extending to a "y" direction of Fig. 11. The 0th-order-beam-processing area R1 is provided by a processing configuration in that the 0th-order-beam-processing area R1 differs from the diffraction-beam-processing area R2 in the transmissivity (or reflectivity or absorption coefficient) to separate the 0th-order beam from the diffraction beam.

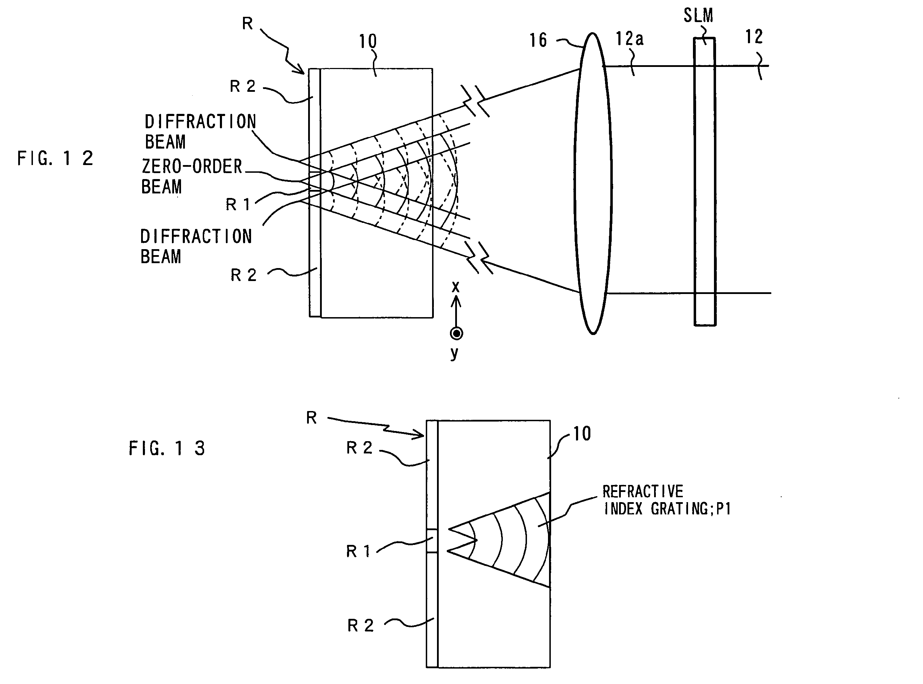

In recording, as shown in Figs. 11 and 12, the 0th-order beam and the diffraction beam of the signal beam 12a itself from the spatial light modulator SLM interfere with each other in the recording medium 10 and generate a three-dimensional interference pattern.

Since the recording medium 10 is illuminated with the signal beam 12a, the hologram-reference beam and the hologram-signal beam are optically interfered with each other to create an optical interference fringe pattern P1, so that a refractive index grating P1 is recorded in the recording medium 10 due to the photorefractive effect as shown in Fig. 13.

The 0th-order beam (i.e., hologram-reference beam) of the signal beam 12a passes through the 0th-order-beam-processing area R1 of the incident-light-processing area R and also the diffraction beam (i.e., hologram-signal beam) of the signal beam 12a passes through the diffraction-beam-processing area R2 of the incident-light-processing area R.

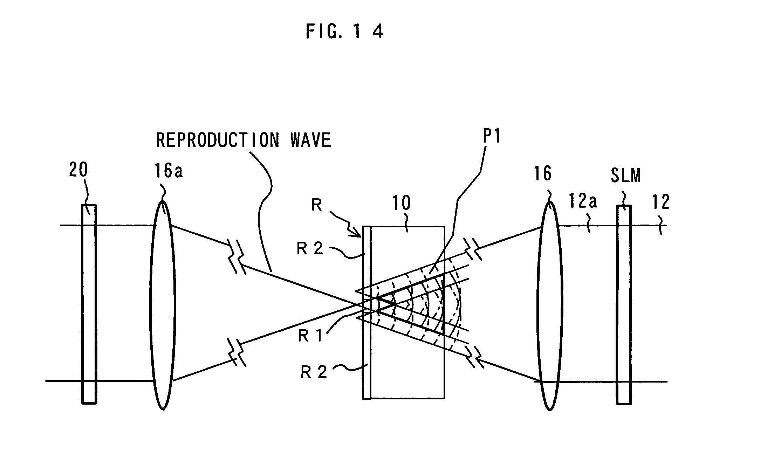

In reproducing, as shown in Fig. 14, the signal beam 12a is not spatially modulated under the condition that the spatial light modulator SLM displays the transparent pattern so as to include only the 0th-order beam (i.e. , hologram-reference beam). With this hologram-reference beam the recording medium 10 is illuminated under the same positional and angular condition of the signal beam used in the recording. Just then, the refractive index grating P1 is illuminated with the signal beam in the recording medium 10, so that there emanates a first reproduced wave from the refractive index grating P1 corresponding to the recorded information. Since the signal beam 12a is only the 0th-order beam, it goes out from the opposite side of the entrance surface of the recording medium 10 on which the beam is incident and passes through the condenser lens 16a. Also the first reproduced wave goes out from the opposite side of the entrance surface of the recording medium 10 and passes through the condenser lens 16a. Therefore the first reproduced wave goes out from the opposite side of the entrance surface of the recording medium 10 and pass through the condenser lens 16a at least in the reproducing process. The first reproduced wave constitutes to an image formation of corresponding to the recorded information on the photo detector 20. Then the photoreceptor of the CCD 20 receives it to re-converted into the electrical digital data signals. Then, the digital data signals are sent to a decoder 26 to reproduce original data.

In the embodiment shown in Fig. 11, it is preferable that the recording medium 10 is made of a photo-sensitive material having a properties so that the optical interference fringe pattern P1 emits a lot of light amounts of the first reproduced wave to improve the precision of reproduced recorded information. This is because the signal beam 12a is received by the photoreceptor 20 at the same time.

### <Fifth embodiment>

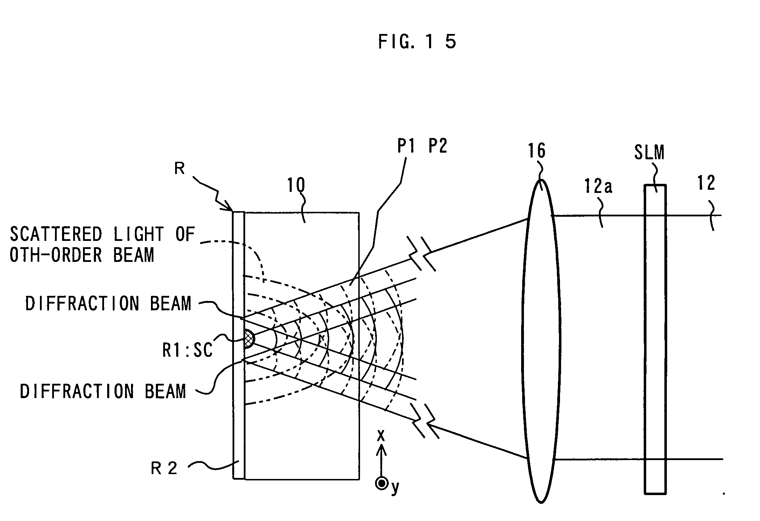

Fig. 15 shows a still further modified example of the embodiment. The present embodiment comprises a 0th-order-beam-scattering area SC for scattering only the 0th-order beam of the signal beam 12a which is provided inside the recording medium 10 on the opposite side of the entrance surface along the track (the "y" direction). The 0th-order-beam-scattering area SC functions as the 0th-order-beam-processing area R1 which separates the 0th-order beam of the incident light from the diffraction beam thereof and returns a part of the beam to the inside of the recording medium 10. The track-shaped 0th-order-beam-scattering area SC extending in the "y" direction scatters the 0th-order beam of the signal beam 12a back into the recording medium 10. The holographic recording is carried out with using the interference fringes created from the incident 0th-order beam, the incident diffraction beam and the scattered 0th-order beam.

In other words, the incident-light-processing area R of the recording medium 10 comprises a 0th-order-beam-scattering area SC scattering the 0th-order beam of the signal beam 12a (i.e., hologram-reference beam) and a diffraction-beam-processing area R2 allowing the diffraction beam (i.e., hologram-signal beam) to pass therethrough. The 0th-order-beam-scattering area SC continuously extends to a "y" direction of Fig. 15 like a track. A plurality of 0th-order-beam-scattering areas SC may be intermittently provided in a line-like form. In this case, the 0th-order-beam-scattering areas SC can hold a positional information of the 0th-order-beam-processing area R1 in the recording medium 10.

The recording process of the refractive index grating using the signal beam 12a (i.e., hologram-reference beam and hologram-signal beam) in the recording medium will be hereinafter described.

Since the recording medium 10 is illuminated with the signal beam 12a, the hologram-reference beam and the hologram-signal beam are optically interfered with each other to create an optical interference fringe pattern P1, so that a refractive index grating P1 is recorded in the recording medium 10 due to the photorefractive effect.

The 0th-order beam of the signal beam 12a (i.e., hologram-reference beam) is scattered by the 0th-order-beam-scattering area SC of the incident-light-processing area R back to the recording medium 10 and becomes a scattered-hologram-reference beam. The diffraction beam (i.e., hologram-signal beam) of the signal beam 12a passes through the diffraction-beam-processing area R2 of the incident-light-processing area R and goes out from the opposite side of the entrance surface of the recording medium 10 on which the beam is incident.

The scattered-hologram-signal beam and the hologram-reference beam of the signal beam 12a are optically interfered with each other in the recording medium 10 to create an optical interference fringe pattern P2, so that a refractive index grating P2 is recorded corresponding to the optical interference fringe pattern P2 in the recording medium 10 due to the photorefractive effect.

Therefore, in the embodiment shown in Fig. 15, at least the refractive index gratings P1 and P2 corresponding to optical interference fringe patterns P1 and P2 are hologram-recorded in the recording medium 10 due to a photorefractive effect.

The reproducing process of the refractive index grating using the signal beam 12a (i.e., hologram-reference beam) in the recording medium 10 will be hereinafter described.

The signal beam 12a is not spatially modulated during the reproducing process because the spatial light modulator SLM displays the transparent pattern. Therefore the signal beam 12a includes only the 0th-order beam.

With the signal beam 12a (i.e., hologram-reference beam) the recording medium 10 is illuminated under the same positional and angular condition of the signal beam used in the recording. Just then, the refractive index grating P1 is illuminated with the signal beam in the recording medium 10, so that there emanates a first reproduced wave from the refractive index grating P1 corresponding to the recorded information.

The 0th-order beam of the signal beam 12a (i.e., hologram-reference beam) is scattered by the 0th-order-beam-scattering area SC of the incident-light-processing area R back to the recording medium 10 and becomes a scattered-hologram-reference beam. The refractive index grating P2 of the recording medium 10 is illuminated with the scattered-hologram-reference beam, so that there emanates a second reproduced wave from the refractive index grating P2 corresponding to the recorded information.

The first and second reproduced waves pass through the diffraction-beam-processing area R2 of the incident-light-processing area R, and go out from the opposite side of the entrance surface of the recording medium 10 on which the beam is incident and passes through the condenser lens 16a. The later processes are performed in the same manner of the embodiment shown in Fig. 14.

Since the scattered-hologram-reference beam goes out from the entrance surface of the recording medium 10, the scattered-hologram-reference beam is hardly received by the photo detector 20 because of being scattered. This phenomenon contributes to simplification of the reproducing of the recorded information.

### <Sixth embodiment>

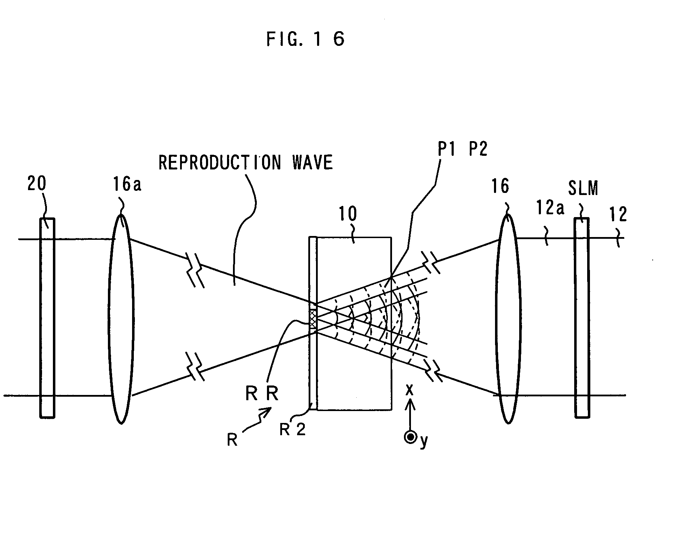

Fig. 16 shows a further modified example of the embodiment. A 0th-order-beam-reflecting area RR which reflects only the 0th-order beam of the signal beam 12a to the inside of the recording medium 10 may be provided in the recording medium 10 on the opposite side of the entrance surface along the track. The 0th-order-beam-reflecting area RR functions as 0th-order-beam-processing area R1 which separates the 0th-order beam of the incident light from the diffraction beam thereof and returns a part of the beam to the inside of the recording medium 10. The track-shaped 0th-order-beam-reflecting area RR extending in the "y" direction returns the 0th-order beam of the signal beam 12a to the track of the recording medium 10 by reflection. The holographic recording is carried out with using the interference fringes generated from the 0th-order beam and the diffraction beam, and the reflected 0th-order beam.

In other words, the incident-light-processing area R of the recording medium 10 comprises a 0th-order-beam-reflecting area RR reflecting the 0th-order beam of the signal beam 12a (i.e., hologram-reference beam) and a diffraction-beam-processing area R2 allowing the diffraction beam (i.e., hologram-signal beam) to pass therethrough. The 0th-order-beam-reflecting area RR continuously extends to a "y" direction of Fig. 16 like a track. A plurality of 0th-order-beam-reflecting areas RR may be intermittently provided in a line-like form. In this case, the 0th-order-beam-reflecting areas RR can hold a positional information of the 0th-order-beam-processing area R1 in the recording medium 10.

The recording process of the refractive index grating using the signal beam 12a (i.e., hologram-reference beam and hologram-signal beam) in the recording medium will be hereinafter described.

Since the recording medium 10 is illuminated with the signal beam 12a, the hologram-reference beam and the hologram-signal beam are optically interfered with each other to create an optical interference fringe pattern P1, so that a refractive index grating P1 is recorded in the recording medium 10 due to the photorefractive effect.

The 0th-order beam of the signal beam 12a (i.e., hologram-reference beam) is reflected by the 0th-order-beam-reflecting area RR of the incident-light-processing area R back to the recording medium 10. Therefore such 0th-order beam of the signal beam 12a reflected by the 0th-order-beam-reflecting area RR is referred to as "reflected-hologram-reference beam". The diffraction beam (i.e., hologram-signal beam) of the signal beam 12a passes through the diffraction-beam-processing area R2 of the incident-light-processing area R and goes out from the opposite side of the entrance surface of the recording medium 10 on which the beam is incident.

The reflected-hologram-reference beam and the hologram-signal beam of the signal beam 12a are optically interfered with each other in the recording medium 10 to create an optical interference fringe pattern P2, so that a refractive index grating P2 is recorded corresponding to the optical interference fringe pattern P2 in the recording medium 10 due to the photorefractive effect.

Therefore, in the embodiment shown in Fig. 16, at least the refractive index gratings P1 and P2 corresponding to optical interference fringe patterns P1 and P2 are hologram-recorded in the recording medium 10 due to a photorefractive effect.

The reproducing process of the refractive index grating using the signal beam 12a (i.e. , hologram-reference beam) in the recording medium 10 will be hereinafter described.

The signal beam 12a is not spatially modulated during the reproducing process. Therefore no diffraction beam due to the spatial modulation occurs and thus the signal beam 12a includes only the 0th-order beam.

With the signal beam 12a (i.e., hologram-reference beam) the recording medium 10 is illuminated under the same positional and angular condition of the signal beam used in the recording. Just then, the refractive index grating P1 is illuminated with the signal beam in the recording medium 10, so that there emanates a first reproduced wave from the refractive index grating P1 corresponding to the recorded information.

Next the signal beam 12a (i.e., hologram-reference beam) is reflected by the 0th-order-beam-reflecting area RR of the incident-light-processing area R back to the recording medium 10 and becomes a reflected-hologram-reference beam. The refractive index grating P2 of recording medium 10 is illuminated with the reflected-hologram-reference beam, so that there emanates a second reproduced wave from the refractive index grating P2 corresponding to the recorded information.

The first and second reproduced waves pass through the diffraction-beam-processing area R2 of the incident-light-processing area R, and go out from the opposite side of the entrance surface of the recording medium 10 on which the beam is incident and passes through the condenser lens 16a. The later processes are performed in the same manner of the embodiment shown in Fig. 14.

The reflected-hologram-reference beam goes out from the entrance surface of the recording medium 10, and can not reach the condenser lens 16a. This phenomenon contributes to simplification of the reproducing of the recorded information.

### <Seventh embodiment>

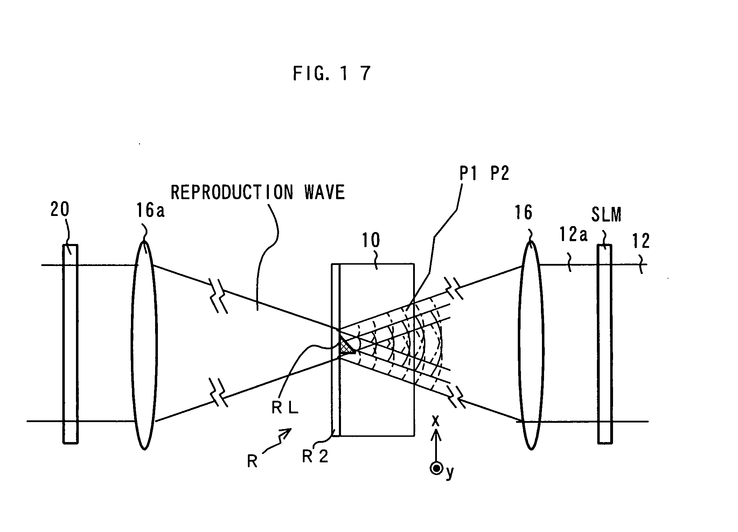

Fig. 17 shows another modified example of the embodiment. The 0th-order-beam-deflecting area RL which deflects the 0th-order beam of the signal beam 12a to the inside of the recording medium 10 may be provided in the recording medium 10 on the opposite side of the entrance surface along the track. The 0th-order-beam-deflecting area RL extending in the "y" direction reflectively returns the 0th-order beam of the signal beam 12a to the recording medium 10 while it deflects the 0th-order beam to one side of the track. The holographic recording is carried out with using the interference fringes generated from the 0th-order beam, the diffraction beam, and the deflected 0th-order beam. According to these modified examples of the embodiment of the recording and reproducing apparatuses, only the 0th-order beam of the signal beam is returned to the inside of the recording medium 10, so that it is possible to efficiently use the amount of illuminated light.

In other words, the incident-light-processing area R of the recording medium 10 comprises a 0th-order-beam-deflecting area RL deflecting the 0th-order beam of the signal beam 12a (i.e., hologram-reference beam) and a diffraction-beam-processing area R2 allowing the diffraction beam (i.e., hologram-signal beam) to pass therethrough. The 0th-order-beam-deflecting area RL continuously extends to a "y" direction of Fig. 17 like a track. A plurality of 0th-order-beam-deflecting areas RL may be intermittently provided in a line-like form. In this case, the 0th-order-beam-deflecting areas RL can hold a positional information of the 0th-order-beam-processing area R1 in the recording medium 10.

The recording process of the refractive index grating using the signal beam 12a (i.e., hologram-reference beam and hologram-signal beam) in the recording medium will be hereinafter described.

Since the recording medium 10 is illuminated with the signal beam 12a, the hologram-reference beam and the hologram-signal beam are optically interfered with each other to create an optical interference fringe pattern P1, so that a refractive index grating P1 is recorded in the recording medium 10 due to the photorefractive effect.

The 0th-order beam of the signal beam 12a (i.e., hologram-reference beam) is deflected and reflected by the 0th-order-beam-deflecting area RL of the incident-light-processing area R back to the recording medium 10 and becomes a deflected-hologram-reference beam. The diffraction beam (i.e., hologram-signal beam) of the signal beam 12a passes through the diffraction-beam-processing area R2 of the incident-light-processing area R and goes out from the opposite side of the entrance surface of the recording medium 10 on which the beam is incident.

The deflected-hologram-reference beam and the hologram-reference beam of the signal beam 12a are optically interfered with each other in the recording medium 10 to create an optical interference fringe pattern P2, so that a refractive index grating P2 is recorded corresponding to the optical interference fringe pattern P2 in the recording medium 10 due to the photorefractive effect.

Therefore, in the embodiment shown in Fig. 17, the refractive index gratings P1 and P2 corresponding to optical interference fringe patterns P1 and P2 are hologram-recorded in the recording medium 10 due to a photorefractive effect at least.

The reproducing process of the refractive index grating using the signal beam 12a (i.e. , hologram-reference beam) in the recording medium 10 will be hereinafter described.

The signal beam 12a is not spatially modulated during the reproducing process. Therefore no diffraction beam due to the spatial modulation occurs and thus the signal beam 12a includes only the 0th-order beam.

With the signal beam 12a (i.e., hologram-reference beam) the recording medium 10 is illuminated under the same positional and angular condition of the signal beam used in the recording. Just then, the refractive index grating P1 is illuminated with the signal beam in the recording medium 10, so that there emanates a first reproduced wave from the refractive index grating P1 corresponding to the recorded information.

Next the 0th-order beam of the signal beam 12a (i.e., hologram-reference beam) is deflected by the 0th-order-beam-deflecting area RL of the incident-light-processing area R back to the recording medium 10 and becomes a deflected-hologram-reference beam. The refractive index grating P2 of recording medium 10 is illuminated with the deflected-hologram-reference beam, so that there emanates a second reproduced wave from the refractive index grating P2 corresponding to the recorded information.

The first and second reproduced waves pass through the diffraction-beam-processing area R2 of the incident-light-processing area R, and go out from the opposite side of the entrance surface of the recording medium 10 on which the beam is incident and pass through the condenser lens 16a. The later processes are performed in the same manner of the embodiment shown in Fig. 14.

The deflected-hologram-reference beam goes out from the entrance surface of the recording medium 10, and can not reach the condenser lens 16a. This phenomenon contributes to simplification of the reproducing of the recorded information.

According to these modified examples described above, since only the 0th-order beam of the signal beam 12a is returned to the inside of the recording medium 10 via the incident-light-processing area R, it is possible to efficiently use an amount of illuminated light and further these configurations contribute to simplification of the reproducing of the recorded information.

### <Eighth embodiment>

In the above embodiments, the holographic recording and producing in the form in which the incident-light-processing area R is integrally provided in the recording medium 10 are described, but the incident-light-processing area R may be provided to the apparatus with the same advantageous effect in the present invention.

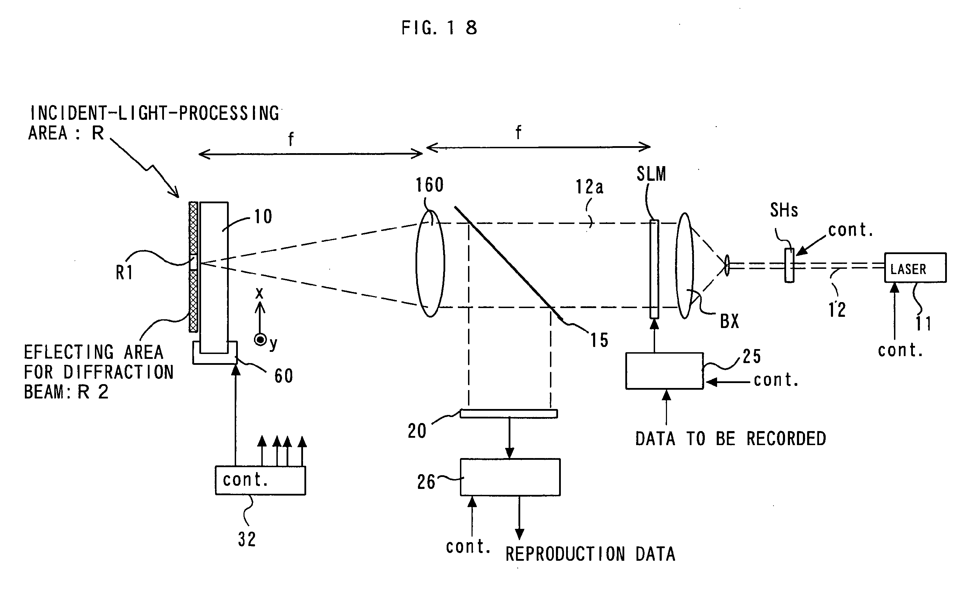

Fig. 18 shows a holographic recording and reproducing apparatus according to another embodiment that uses another recording medium. The holographic recording and reproducing apparatus comprises an incident-light-processing area R which is disposed on or adjacent to the recording medium 10 at an opposite side of an entrance surface thereof on which the signal beam is incident. The incident-light-processing area R separates the 0th-order beam and the diffraction beam from each other to return a part of the incident beam to the inside of the recording medium. The incident-light-processing area R comprises a 0th-order-beam-processing area R1 for passing the 0th-order beam in the signal beam 12a and a diffraction-beam-processing area R2 for reflecting the diffraction beam in the signal beam 12a. As far as the processing function of the 0th-order-beam-processing area R1 is different from that of the diffraction-beam-processing area R2, the 0th-order-beam-processing area R1 may have a function to absorb the 0th-order beam. The 0th-order-beam-processing area R1 may have a light-permeability or light-absorbency. The holographic recording and reproducing apparatus shown in Fig. 18 is identical to the apparatus shown in Fig. 3, except that the incident-light-processing area R is provided in the apparatus adjacent to the recording medium 10.

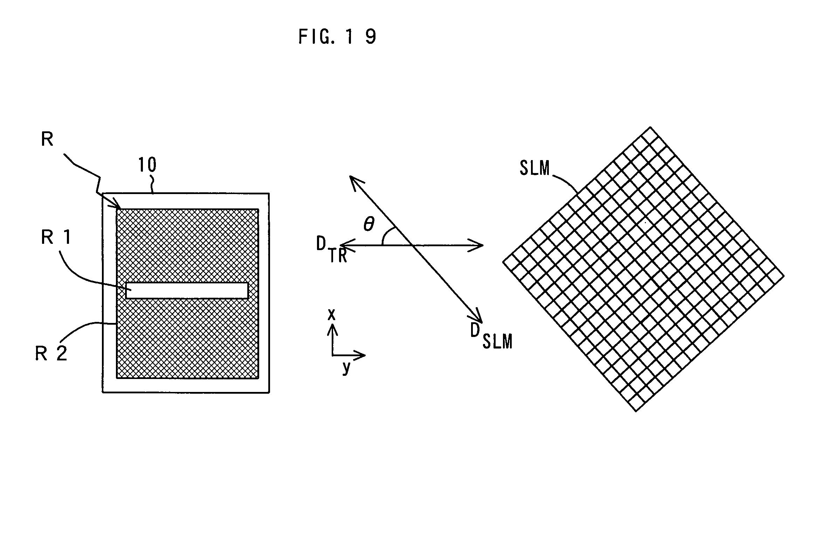

As shown in Fig. 19, in the apparatus, the incident-light-processing area R is disposed at the opposite side of an entrance surface of the recording medium 10 and has as a window of the 0th-order-beam-processing area R1 for passing the 0th-order beam in the signal beam 12a therethrough. The recording medium 10 is relatively disposed so as to be movable in a "y" direction of the Figure with respect to the window of the 0th-order-beam-processing area R1. The recording medium 10 is movably disposed so as to move in the direction D_{TR} making a predetermined angle of e (θ≠0) with an extending direction D_{SLM} of a row or a column of the spatial light modulator SLM pixel matrix.

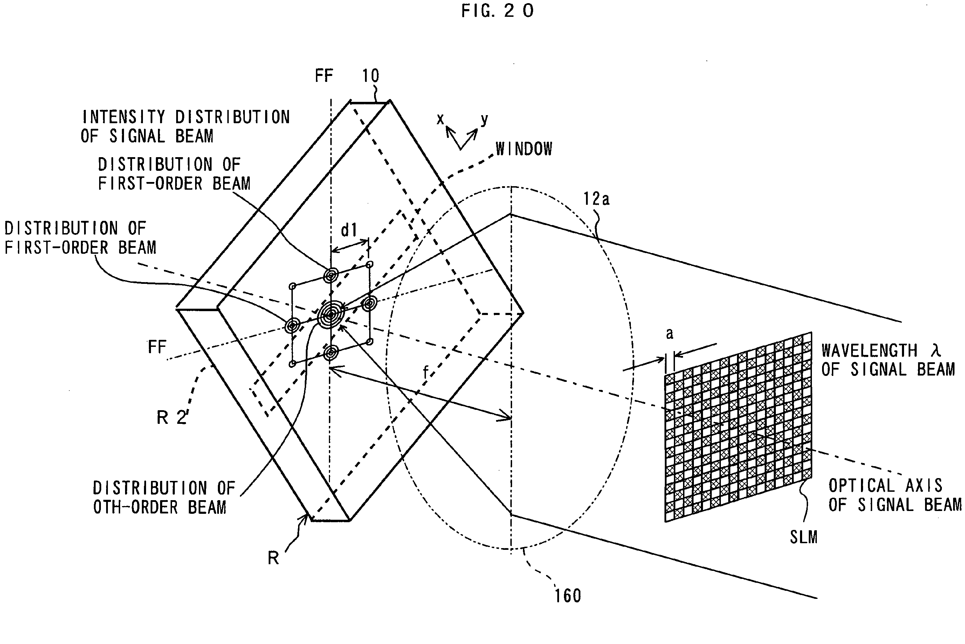

As shown in Fig. 20, the diffraction beam becomes the highest frequency component in the signal beam 12a modulated by the spatial light modulator SLM on the basis of pixel matrix (pitch is "a") thereof. The signal beam 12a is Fourier-transformed through the condenser lens 160 and then the spectrum distribution of light intensity with respect to a spatial frequency appears in the Fourier plane FF, as shown in Fig. 20, according to the spatial modulation due to the spatial light modulator SLM.

The process of recording and reproducing of hologram of this embodiment is identical to the apparatus case shown in Fig. 3, except that the incident-light-processing area R and the recording medium 10 are relatively moved.

### <Ninth embodiment>

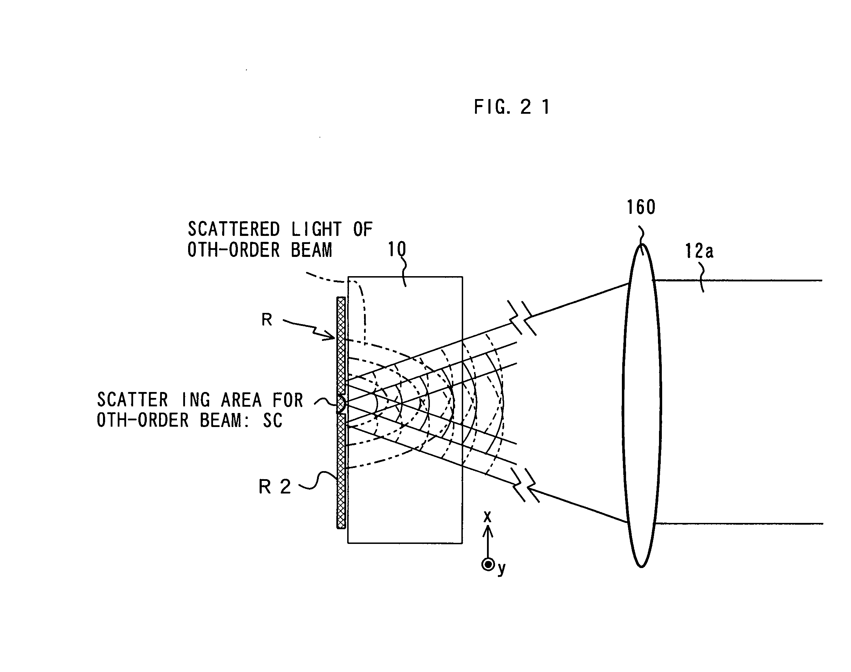

Furthermore Fig. 21 shows another modified embodiment. Instead of the transparent portion of the 0th-order-beam-processing area, there is provided a 0th-order-beam-scattering area SC in the incident-light-processing area R on the opposite side of the entrance surface of the recording medium 10. The holographic recording is carried out with the use of the interference fringes created from the 0th-order beam, the diffraction beam, the scattered 0th-order beam and the reflected diffraction beam.

### <Tenth embodiment>

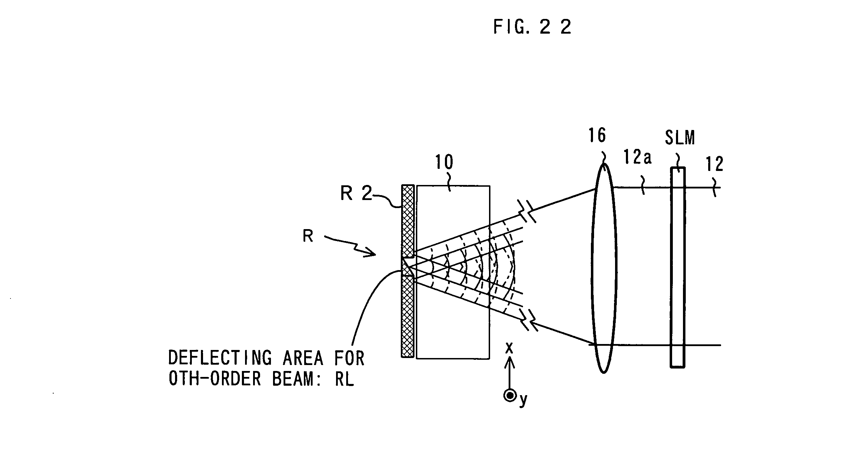

Fig. 22 shows a further modified example of the embodiment. There is provided a 0th-order-beam-deflecting area RL in the incident-light-processing area R on or adjacent to the opposite side of the entrance. The 0th-order-beam-deflecting area RL has an inclined reflective surface for deflecting the 0th-order beam of the signal beam 12a to the inside with respect to the axis of the signal beam 12a. The 0th-order-beam-deflecting area RL functions as another 0th-order-beam-processing area R1 which separates the 0th-order beam of the incident light from the diffraction beam and returns a part of the beam to the inside of the recording medium 10. The holographic recording is carried out with the use of the interference fringes generated from the 0th-order beam, the diffraction beam, the deflected 0th-order beam and the reflected diffraction beam.

### <Eleventh embodiment>

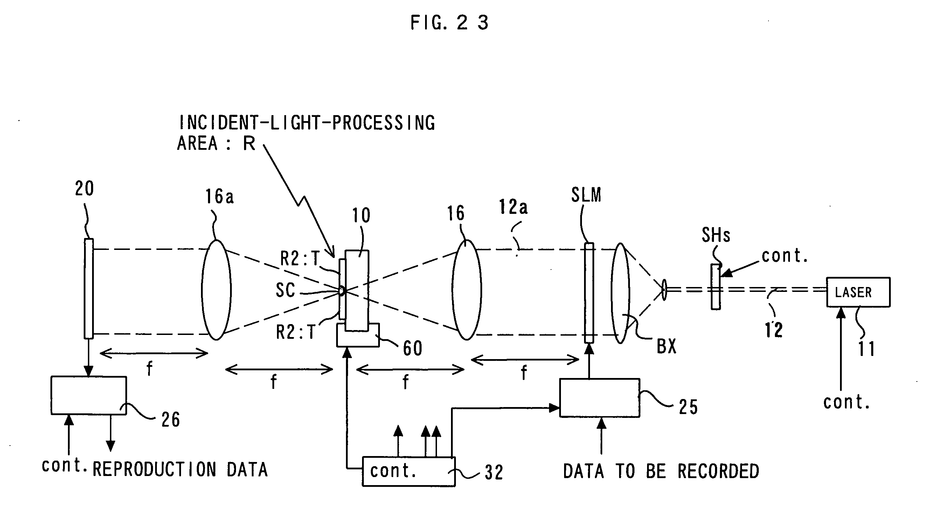

Fig. 23 shows a still further holographic recording and reproducing apparatus according to another embodiment that uses a transparent diffraction-beam-processing area R2 through which the light beam passes in the incident-light-processing area R. This holographic recording and reproducing apparatus is identical to the apparatus shown in Fig. 1, except that the incident-light-processing area R is added and the optical system composed of the beam splitter 13, the mirrors 18 and 19 for generating the reference beam is removed. In addition, the incident-light-processing area R comprises a 0th-order-beam-scattering area SC scattering the 0th-order beam and a transparent portion T (diffraction-beam-processing area R2) allowing the diffraction beam to pass therethrough.

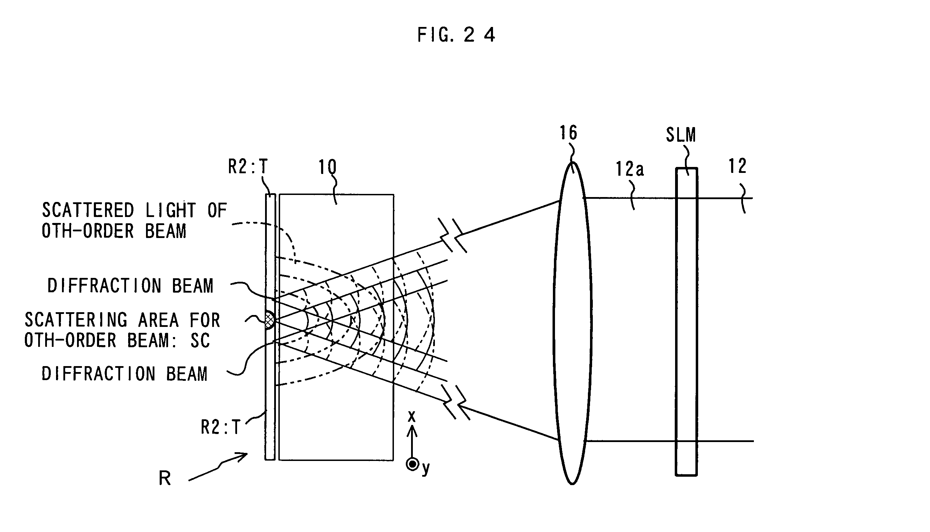

As shown in Fig. 24, in the apparatus at the opposite side of the entrance surface of the recording medium 10, there is a 0th-order-beam-scattering area SC provided inside of the incident-light-processing area R which separates the 0th-order beam of the incident light from the diffraction beam thereof and returns a part of the beam to the inside of the recording medium 10. The 0th-order-beam-scattering area SC scatters only the 0th-order beam of the signal beam 12a. The track-shaped 0th-order-beam-scattering area SC extending in the "y" direction scatters the 0th-order beam of the signal beam 12a back into the recording medium 10. The holographic recording is carried out with the use of the interference fringes generated from the 0th-order beam, the diffraction beam, the scattered 0th-order beam and the reflected diffraction beam to generate optical interference fringe patterns, so that refractive index gratings are recorded in the recording medium 10 due to the photorefractive effect. In reproducing, the recording medium 10 is fixed in the apparatus in the same manner in the recording and illuminated with the a converged reference beam 12. When the reference beam 12 passes through the recording medium 10, then a reproduced wave is outputed from the refractive index grating of the recording medium 10. When the reference beam 12 is incident then reproduced beam which reproduces the recorded light interference pattern appears on the opposite side of the recording medium 10. Leading the reproduced wave to an inverse Fourier transform lens 16a and performing the inverse Fourier transform reproduces the dot pattern signals. The dot pattern signals are received by a photo detector 20 such as a charge-coupled device CCD and the like disposed in the position of a focal length, and re-converted into the electrical digital data signals. Then, the digital data signals are sent to a decoder to reproduce original data.

### <Twelfth embodiment>

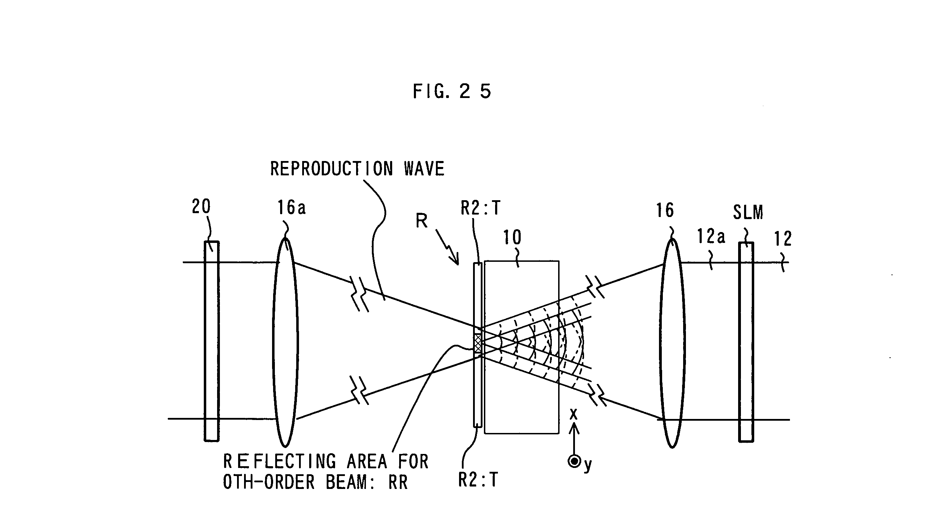

Fig. 25 shows a part of another further modified embodiment. This holographic recording and reproducing apparatus is identical to the apparatus shown in Fig. 23, except that the 0th-order-beam-reflecting area RR which reflects only the 0th-order beam of the signal beam 12a inside and a transparent portion T (diffraction-beam-processing area R2) allowing the diffraction beam to pass therethrough are provided in the apparatus.

In other words, the incident-light-processing area R adjacent to the recording medium 10 comprises a 0th-order-beam-reflecting area RR reflecting the 0th-order beam of the signal beam 12a (i.e., hologram-reference beam) and a diffraction-beam-processing area R2 allowing the diffraction beam (i.e., hologram-signal beam) to pass therethrough.

### <Thirteenth embodiment>

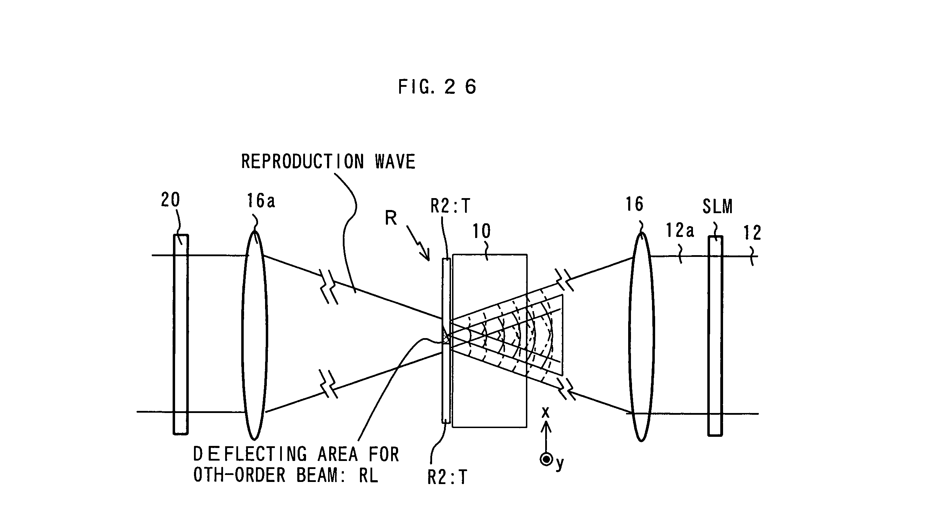

Fig. 26 shows a part of a further modified embodiment. This holographic recording and reproducing apparatus is identical to the apparatus shown in Fig. 23, except the 0th-order-beam-deflecting area RL which reflects only the 0th-order beam of the signal beam 12a inside and a transparent portion T (diffraction-beam-processing area R2) allowing the diffraction beam to pass therethrough are provided in the apparatus. The 0th-order-beam-deflecting area RL of the incident-light-processing area extending in the "y" direction of the Figure deflects the 0th-order beam toward one side of the track inside the recording medium 10 so that the holographic recording is carried out with the use of the interference fringes generated from the 0th-order beam, the diffraction beam and the deflected 0th-order beam. The 0th-order-beam-deflecting area RL has an inclined reflective surface with respect to the axis of the signal beam 12a for deflecting the 0th-order beam of the signal beam 12a to the inside. The 0th-order-beam-deflecting area RL functions as another 0th-order-beam-processing area R1 which separates the 0th-order beam of the incident light from the diffraction beam and returns a part of the beam to the inside of the recording medium 10. The track-shaped 0th-order-beam-deflecting area RL extending in the "y" direction returns the 0th-order beam of the signal beam 12a to the recording medium 10 deflecting toward one side of the track. The holographic recording is carried out with the use of the interference fringes generated from the 0th-order beam, the diffraction beam, the deflected 0th-order beam and the reflected diffraction beam.

These modified examples have configurations to return only the 0th order beam of the signal beam to the inside of the recording medium 10, so that it is possible to efficiently use an amount of illuminated light. The incident-light-processing area has a function to separate the incident beam to return a part thereof to the inside of the recording medium in order to individually process the 0th-order beam and the diffraction beam in the incident light with different processes. Therefore the incident-light-processing area may have a 0th-order-beam-processing area allowing the 0th-order beam to pass through or absorbing the 0th-order beam; and a diffraction-beam-reflecting area reflecting or deflecting or scattering the diffraction-beam. Alternatively the incident-light-processing area may have a 0th-order-beam-processing area reflecting or scattering or deflecting or absorbing the 0th-order beam; and a diffraction-beam-reflecting area reflecting or deflecting the diffraction-beam.

### <Fourteenth embodiment>

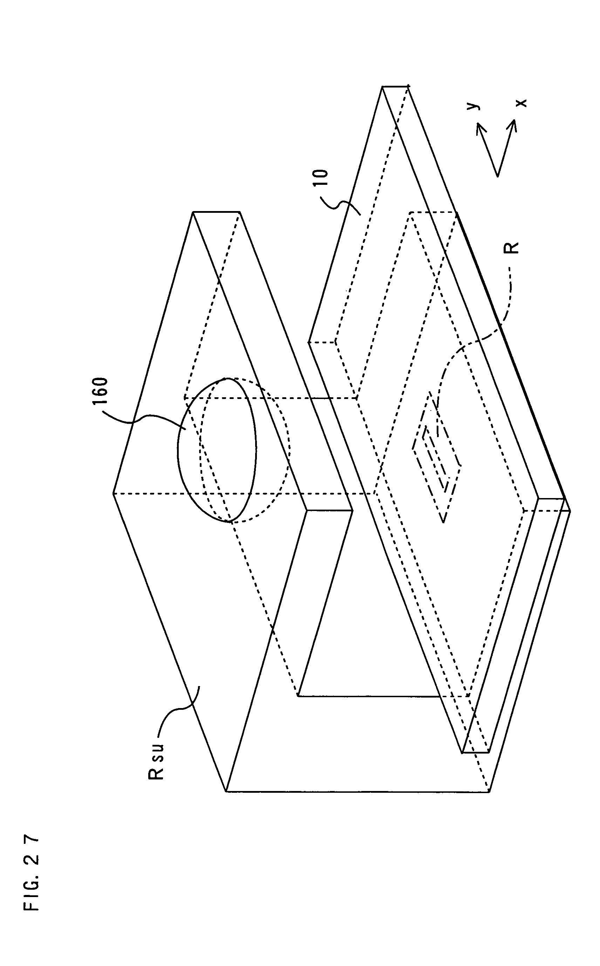

Fig. 27 shows a part of a still further modified embodiment in comparison with the apparatus shown in Fig. 18 in that the incident-light-processing area R is individually provided adjacent to the recording medium 10. As shown in Fig. 27, the incident-light-processing area R and the condenser lens 160 may be integrally fixed on a support case Rsu to face each other so that the recording medium 10 is able to be inserted therebetween.

### <Fifteenth embodiment>

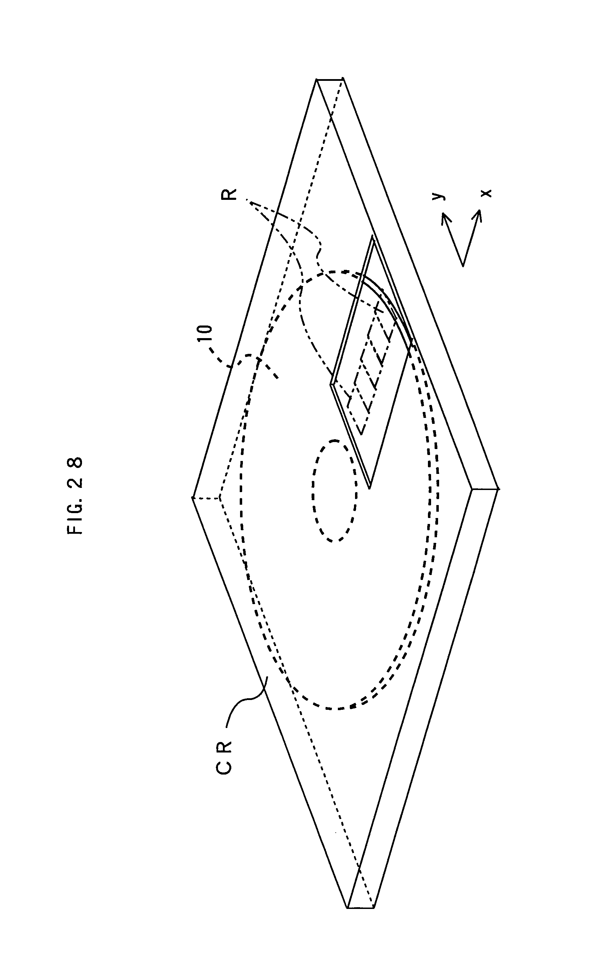

Furthermore, according to another embodiment of the present invention, the recording medium 10 may be provided in a disk or card form . For example, a cartridge CR shown in Fig. 28 accommodates a disk of the recording medium 10 to be rotatable. The cartridge CR is provided with the incident-light-processing areas R at the inner sidewall thereof and has an opening for access to the recording medium disk with the light beam.

### <Sixteenth embodiment>

In addition to the above embodiments of the holographic recording and reproducing method and the apparatus therefor, the present invention apparently includes a recording method, a reproducing method, a recording apparatus, and a reproducing apparatus of the hologram. In the above embodiments, the laser beam is spatially modulated in accordance with the two-dimensional data, in other words, two-dimensional modulation is used. The present invention, however, is applicable to a holographic recording and reproducing method and apparatus which spatially modulate the laser beam in accordance with one-dimensional data. In the above embodiments, the photorefractive material is used for the photosensitive material of the recording medium, but other photosensitive materials such as hole burning material, photochromic material and the like may be used for the photosensitive material of the recording medium.

## Claims

1. A method for holographic recording and reproducing comprising a recording process and a reproducing process,
the recording process including the steps of:
generating a signal beam by spatially modulating a coherent reference beam in accordance with information to be recorded;
illuminating with the signal beam a recording medium made of a photosensitive material to allow the signal beam to pass through said recording medium; and
creating a diffraction grating area recorded by a light interference pattern in a portion where a 0th-order beam and a diffraction beam of the signal beam interfere with each other inside said recording medium; and
the reproducing process including the step of:
illuminating said diffraction grating area with said reference beam to generate a reproduced wave corresponding to the signal beam.

2. The method for holographic recording and reproducing according to claim 1, further comprising an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium.

3. The method for holographic recording and reproducing according to claim 2, further comprising a line-like track formed in a part of said incident-light-processing area.

4. The method for holographic recording and reproducing according to claim 3, wherein said track has positioning information of said incident-light-processing area with respect to said recording medium.

5. The method for holographic recording and reproducing according to claim 2, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

6. The method for holographic recording and reproducing according to claim 2, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

7. The method for holographic recording and reproducing according to claim 2, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

8. The method for holographic recording and reproducing according to any one of claims 5 to 7, further comprising a spatial light modulator including a rows and columns matrix of pixels to spatially modulate the reference beam, wherein said spatial light modulator and said recording medium are relatively disposed in such a manner that said 0th-order-beam-processing area is not illuminated with the diffraction beam of the signal beam.

9. The method for holographic recording and reproducing according to claim 8, wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

10. The method for holographic recording and reproducing according to claim 6, wherein the reproduced wave is output from the opposite side of the entrance surface of the recording medium on which the signal beam is incident, in the reproducing process.

11. A method for holographic recording comprising the steps of:
generating a signal beam by spatially modulating a coherent reference beam in accordance with information to be recorded;
illuminating with the signal beam a recording medium made of a photosensitive material to allow the signal beam to pass through said recording medium; and
creating a diffraction grating area recorded by a light interference pattern in a portion where a 0th-order beam and a diffraction beam of the signal beam interfere with each other inside said recording medium.

12. The method for recording a hologram according to claim 11, further comprising an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium.

13. The method for recording a hologram according to claim 12, further comprising a line-like track formed in a part of said incident-light-processing area.

14. The method for recording a hologram according to claim 13, wherein said track has positioning information of said incident-light-processing area with respect to said recording medium.

15. The method for recording a hologram according to claim 12, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

16. The method for recording a hologram according to claim 12, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

17. The method for recording a hologram according to claim 12, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

18. The method for recording a hologram according to any one of claims 15 to 17, further comprising a spatial light modulator including a rows and columns matrix of pixels to spatially modulate the reference beam, wherein said spatial light modulator and said recording medium are relatively disposed in such a manner that said 0th-order-beam-processing area is not illuminated with the diffraction beam of the signal beam.

19. The method for recording a hologram according to claim 18, wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

20. A method for holographic reproducing comprising the steps of:
providing a recording medium made of a photosensitive material having a diffraction grating area formed through a recording process including the steps of: generating a signal beam by spatially modulating a coherent reference beam in accordance with information to be recorded; and illuminating with the signal beam the recording medium to allow the signal beam to pass through said recording medium so as to form the diffraction grating area recorded by a light interference pattern in a portion where a 0th-order beam and a diffraction beam of the signal beam interfere with each other inside said recording medium; and
illuminating a coherent reference beam to the diffraction grating area to generate a reproduced wave corresponding to the signal beam.

21. The method for reproducing a hologram according to claim 20, further comprising an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium.

22. The method for reproducing a hologram according to claim 21, further comprising a line-like track formed in a part of said incident-light-processing area.

23. The method for reproducing a hologram according to claim 22, wherein said track has positioning information of said incident-light-processing area with respect to said recording medium.

24. The method for reproducing a hologram according to claim 21, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

25. The method for reproducing a hologram according to claim 21, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

26. The method for reproducing a hologram according to claim 21, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

27. The method for reproducing a hologram according to any one of claims 24 to 26, wherein the diffraction grating area of the recording medium is recorded by using a spatial light modulator including a rows and columns matrix of pixels in such a manner that said spatial light modulator and said recording medium are relatively disposed so that said 0th-order-beam-processing area is not illuminated with the diffraction beam of the signal beam.

28. The method for reproducing a hologram according to claim 27, wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

29. The method for reproducing a hologram according to claim 25, wherein the reproduced wave is output from the opposite side of the entrance surface of the recording medium on which the signal beam is incident, in the reproducing process.

30. A holographic recording and reproducing apparatus for recording information as a diffraction grating area in a recording medium, and for reproducing said recorded information from said diffraction grating area, said holographic recording and reproducing apparatus comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam;
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium, and said illuminating optical system illuminating said diffraction grating area with said reference beam to generate a reproduced wave corresponding to the signal beam; and
a detecting unit for detecting said recorded information formed into an image by the reproduced wave.

31. The holographic recording and reproducing apparatus according to claim 30, further comprising an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium.

32. The holographic recording and reproducing apparatus according to claim 31, further comprising a line-like track formed in a part of said incident-light-processing area.

33. The holographic recording and reproducing apparatus according to claim 32, wherein said track has positioning information of said incident-light-processing area with respect to said recording medium.

34. The holographic recording and reproducing apparatus according to claim 31, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

35. The holographic recording and reproducing apparatus according to claim 31, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

36. The holographic recording and reproducing apparatus according to claim 31, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

37. The holographic recording and reproducing apparatus according to any one of claims 34 to 36, further comprising a spatial light modulator including a rows and columns matrix of pixels to spatially modulate the reference beam, wherein said spatial light modulator and said recording medium are relatively disposed in such a manner that said 0th-order-beam-processing area is not illuminated with the diffraction beam of the signal beam.

38. The holographic recording and reproducing apparatus according to claim 37, wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

39. The holographic recording and reproducing apparatus according to claim 35, wherein the reproduced wave is output from the opposite side of the entrance surface of the recording medium on which the signal beam is incident.

40. The holographic recording and reproducing apparatus according to claim 34 or 36, further comprising a splitting unit separating the reproduced wave from an optical path of the reference beam.

41. A holographic recording apparatus for recording information as a diffraction grating area in a recording medium, comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam; and
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium.

42. The holographic recording apparatus according to claim 41, wherein the recording medium comprises an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium.

43. The holographic recording apparatus according to claim 42, further comprising a line-like track formed in a part of said incident-light-processing area.

44. The holographic recording apparatus according to claim 43, wherein said track has positioning information of said incident-light-processing area with respect to said recording medium.

45. The holographic recording apparatus according to claim 42, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

46. The holographic recording apparatus according to claim 42, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

47. The holographic recording apparatus according to claim 42, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

48. The holographic recording apparatus according to any one of claims 45 to 47, further comprising a spatial light modulator including a rows and columns matrix of pixels to spatially modulate the reference beam, wherein said spatial light modulator and said recording medium are relatively disposed in such a manner that said 0th-order-beam-processing area is not illuminated with the diffraction beam of the signal beam.

49. The holographic recording apparatus according to claim 48, wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

50. A holographic reproducing apparatus for reproducing information recorded as a diffraction grating area in a recording medium, the reproducing apparatus comprising:
a holding section for detachably holding a recording medium made of a photosensitive material;
a light source for generating a coherent reference beam;
an illuminating unit including an illuminating optical system for illuminating the recording medium with the reference beam to allow it to enter into and pass through the diffraction grating area in the recording medium to generate a reproduced wave corresponding to the signal beam; and
a detecting unit for detecting said recorded information formed into an image by the reproduced wave.

51. The holographic reproducing apparatus according to claim 50, wherein the recording medium comprises an incident-light-processing area provided in said recording medium on an opposite side of an entrance surface of the recording medium on which the signal beam is incident, the incident-light-processing area separating the 0th-order beam and the diffraction beam from each other to return a part of the incident beam to the inside of said recording medium.

52. The holographic reproducing apparatus according to claim 51, further comprising a line-like track formed in a part of said incident-light-processing area.

53. The holographic reproducing apparatus according to claim 52, wherein said track has positioning information of said incident-light-processing area with respect to said recording medium.

54. The holographic reproducing apparatus according to claim 51, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

55. The holographic reproducing apparatus according to claim 51, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

56. The holographic reproducing apparatus according to claim 51, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

57. The holographic reproducing apparatus according to any one of claims 54 to 56, wherein the diffraction grating area of the recording medium is recorded by using a spatial light modulator including a rows and columns matrix of pixels in such a manner that said spatial light modulator and said recording medium are relatively disposed so that said 0th-order-beam-processing area is not illuminated with the diffraction beam of the signal beam.

58. The holographic reproducing apparatus according to claim 57, wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

59. The holographic reproducing apparatus according to claim 55, wherein the reproduced wave is output from the opposite side of the entrance surface of the recording medium on which the signal beam is incident.

60. The holographic reproducing apparatus according to claim 54 or 56, further comprising a splitting unit separating the reproduced wave from an optical path of the reference beam.

61. A recording medium made of a photosensitive material capable of being recorded by illumination with a coherent light beam, comprising an incident-light-processing area provided in said recording medium on an opposite side of an entrance surface of the recording medium on which the light beam is incident, the incident-light-processing area separating a 0th-order beam and a diffraction beam of the light beam from each other to return a part of the incident beam to the inside of said recording medium.

62. The recording medium according to claim 61, further comprising a line-like track formed in a part of said incident-light-processing area.

63. The recording medium according to claim 62, wherein said track has positioning information of said incident-light-processing area with respect to said recording medium.

64. The recording medium according to claim 61, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

65. The recording medium according to claim 61, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

66. The recording medium according to claim 61, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

67. A holographic recording and reproducing apparatus for recording information as a diffraction grating area in a recording medium, and for reproducing said recorded information from said diffraction grating area, said holographic recording and reproducing apparatus comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam;
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium, and said illuminating optical system illuminating said diffraction grating area with said reference beam to generate a reproduced wave corresponding to the signal beam;
an incident-light-processing area provided adjacent to an opposite side of an entrance surface of the recording medium on which the signal beam is incident, the incident-light-processing area separating the 0th-order beam and the diffraction beam from each other to return a part of the incident beam to the inside of said recording medium; and
a detecting unit for detecting said recorded information formed into an image by the reproduced wave.

68. The holographic recording and reproducing apparatus according to claim 67, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

69. The holographic recording and reproducing apparatus according to claim 67, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

70. The holographic recording and reproducing apparatus according to claim 67, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

71. The holographic recording and reproducing apparatus according to claim 67, wherein said spatial light modulator includes a rows and columns matrix of pixels and wherein said spatial light modulator and said recording medium are relatively disposed with respect to an optical axis of the signal beam in such a manner that an extending direction of a row or a column of said spatial light modulator makes a predetermined angle of e (θ≠0) with an extending direction of said 0th-order-beam-processing area.

72. The holographic recording and reproducing apparatus according to claim 69, wherein the reproduced wave is output from the opposite side of the entrance surface of the recording medium on which the signal beam is incident.

73. The holographic recording and reproducing apparatus according to claim 68 or 70, further comprising a splitting unit separating the reproduced wave from an optical path of the reference beam.

74. A holographic recording apparatus for recording information as a diffraction grating area in a recording medium, comprising:
a holding section for detachably holding a recording medium made of a photosensitive material;
a light source for generating a coherent reference beam;
a signal beam generating unit including a spatial light modulator, said spatial light modulator spatially modulating said reference beam in accordance with said information to be recorded to generate a signal beam;
an interference unit including an illuminating optical system for illuminating the recording medium with the signal beam to allow it to enter into and pass through said recording medium, said illuminating optical system creating a diffraction grating area according to a light interference pattern in a portion where a 0th-order beam and a diffraction beam of the signal beam interfere with each other inside said recording medium; and
an incident-light-processing area provided adjacent to an opposite side of an entrance surface of the recording medium on which the signal beam is incident, the incident-light-processing area separating the 0th-order beam and the diffraction beam from each other to return a part of the incident beam to the inside of said recording medium.

75. The holographic recording apparatus according to claim 74, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

76. The holographic recording apparatus according to claim 74, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

77. The holographic recording apparatus according to claim 74, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

78. The holographic recording apparatus according to claim 74, wherein said spatial light modulator includes a rows and columns matrix of pixels and wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

79. A holographic reproducing apparatus for reproducing information recorded as a diffraction grating area in a recording medium, the reproducing apparatus comprising:
a holding section for detachably holding a recording medium made of a photosensitive material;
a light source for generating a coherent reference beam;
an illuminating unit including an illuminating optical system for illuminating the recording medium with the reference beam to allow it to enter into and pass through the diffraction grating area in the recording medium to generate a reproduced wave corresponding to the signal beam;
an incident-light-processing area provided adjacent to an opposite side of an entrance surface of the recording medium on which the signal beam is incident, the incident-light-processing area separating the 0th-order beam and the diffraction beam from each other to return a part of the incident beam to the inside of said recording medium; and
a detecting unit for detecting said recorded information formed into an image by the reproduced wave.

80. The holographic reproducing apparatus according to claim 79, wherein said incident-light-processing area comprises a 0th-order-beam-processing area and a diffraction-beam-reflecting area, the 0th-order-beam-processing area allowing the 0th-order beam to pass through or scattering the 0th-order beam or deflecting the 0th-order beam or absorbing the 0th-order beam, the diffraction-beam-reflecting area defining the 0th-order-beam-processing area and reflecting the diffraction beam.

81. The holographic reproducing apparatus according to claim 79, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or absorbing the 0th-order beam, the diffraction-beam-reflecting area defining the 0th-order-beam-processing area and allowing the diffraction beam to pass through.

82. The holographic reproducing apparatus according to claim 79, wherein said incident-light-processing area comprises a 0th-order-beam-processing area and a diffraction-beam-reflecting area, the 0th-order-beam-processing area reflecting the 0th-order beam or scattering the 0th-order beam or deflecting the 0th-order beam or allowing the 0th-order beam to pass through, the diffraction-beam-reflecting area defining the 0th-order-beam-processing area and absorbing the diffraction beam.

83. The holographic reproducing apparatus according to any one of claims 80 to 82, wherein the diffraction grating area of the recording medium is recorded by using a spatial light modulator including a rows and columns matrix of pixels in such a manner that said spatial light modulator and said recording medium are relatively disposed so that said 0th-order-beam-processing area is not illuminated with the diffraction beam of the signal beam.

84. The holographic reproducing apparatus according to claim 83, wherein said spatial light modulator and said recording medium are relatively disposed with respect to an optical axis of the signal beam in such a manner that an extending direction of a row or a column of said spatial light modulator makes a predetermined angle of θ (θ≠0) with an extending direction of said 0th-order-beam-processing area.

85. The holographic reproducing apparatus according to claim 81, wherein the reproduced wave is output from the opposite side of the entrance surface of the recording medium on which the signal beam is incident, in the reproducing process.

86. The holographic reproducing apparatus according to claim 80 or 82, further comprising a splitting unit separating the reproduced wave from an optical path of the reference beam.
